# EUROPEAN PATENT APPLICATION

(11) **EP 4 421 930 A1**
(43) Date of publication of application: **28.08.2024**
(21) Application number: 24155319.7
(22) Date of filing: 01.02.2024
(51) Int. Cl.: H01M 10/04, H01M 10/0525, H01M 10/0587, H01M 50/46

(54) **METHOD OF MANUFACTURING ELECTRICITY STORAGE DEVICE, AND SEPARATOR FOR ELECTRICITY STORAGE DEVICE**

(30) Priority: 22.02.2023 JP 2023025775
(71) Applicant: Prime Planet Energy & Solutions, Inc., Chuo-ku Tokyo 103-0022 (JP)
(72) Inventor: ISEDA, Taisuke, Tokyo, 103-0022 (JP); NISHIDA, Akira, Tokyo, 103-0022 (JP)
(74) Representative: Kuhnen & Wacker Patent- und Rechtsanwaltsbüro PartG mbB

(57) **Abstract**

Provided is a technology obtaining an electricity storage device including a wound electrode body with high productivity. A method of manufacturing an electricity storage device of one embodiment disclosed herein includes: a winding step S2 of winding a positive electrode 22 and a negative electrode 24 with a separator 26 interposed therebetween to produce a wound body 20A; and after the winding step S2, a pressing step S3 of pressing the wound body 20A to form each of wound electrode bodies 20a, 20b, and 20c having a flat shape, wherein the separator partially having an adhesive layer 6 on at least one surface thereof is used in the winding step S2, the adhesive layer 6 includes a first adhesive region 6A and a second adhesive region 6B, and the thickness T1 of the first adhesive region 6A is 1.5 times or more the thickness T2 of the second adhesive region 6B. The manufacturing method further includes a formation step S1 before the winding step S2.

## Description

### BACKGROUND OF THE DISCLOSURE

### 1. Technical Field

The present disclosure relates to a method of manufacturing an electricity storage device, and a separator for the electricity storage device. 2. Background

For example, Japanese Patent No. 5328034 discloses a battery including a wound electrode body that has a positive electrode, a negative electrode and a separator, in which a heat-resistant porous layer containing an adhesive resin is provided on the surface of the separator. Such a wound electrode body is described as being produced by arranging and winding the positive electrode and the negative electrode so that these electrodes overlap each other with the separator interposed therebetween, and then pressing them into a flat shape.

### SUMMARY

According to the studies conducted by the inventors, it has been found that strong adhesion between an electrode and the separator having the adhesive resin as described above when winding respective members may lead to an inappropriate change in the positional relationship between the separator and the electrode when pressing and deforming the wound body. This may cause distortion, wrinkles, or the like in the separator. In contrast, if the separator does not have such an adhesive resin, the winding of the wound body may be misaligned. This is not desirable from the viewpoint of productivity and the like.

That is, it has been seen that there is still room for improvement in terms of productivity in the manufacturing of the electricity storage device (e.g., battery) including the wound electrode body having the adhesive layer described above.

The present disclosure has been made in view of such circumstances, and a main obj ect thereof is to provide a technology that can obtain an electricity storage device including a wound electrode body with high productivity.

To achieve such an object, a method of manufacturing an electricity storage device disclosed herein is provided to manufacture an electricity storage device including a wound electrode body having a flat shape, the wound electrode body including a first electrode having a strip shape, a second electrode having a strip shape, and a separator having a strip shape, the first electrode and the second electrode being wound with the separator interposed therebetween, the method including the steps of winding the first electrode and the second electrode with the separator interposed therebetween to produce a wound body; and after the winding step, pressing the wound body to form a wound electrode body having a flat shape, wherein the separator partially having an adhesive layer on at least one surface thereof is used in the winding step, and the adhesive layer includes a first adhesive region and a second adhesive region. A thickness T1 of the first adhesive region is 1.5 times or more a thickness T2 of the second adhesive region. According to the method of manufacturing an electricity storage device with such an arrangement, the electricity storage device including the wound electrode body can be obtained with high productivity.

To achieve such an object, another method of manufacturing an electricity storage device disclosed herein is provided to manufacture an electricity storage device including a wound electrode body having a flat shape, the wound electrode body including a first electrode having a strip shape, a second electrode having a strip shape, and a separator having a strip shape, the first electrode and the second electrode being wound with the separator interposed therebetween, the method including the steps of winding the first electrode and the second electrode with the separator interposed therebetween to produce a wound body; and after the winding step, pressing the wound body to form a wound electrode body having a flat shape, wherein the separator partially having an adhesive layer on at least one surface thereof is used in the winding step, the adhesive layer includes a first adhesive region and a second adhesive region, and a thickness of the first adhesive region is larger than a thickness of the second adhesive region. In the winding step, the first adhesive region and the first electrode adhere to each other, and in the pressing step, the second adhesive region and the first electrode adhere to each other. According to the method of manufacturing an electricity storage device with such an arrangement, the electricity storage device including the wound electrode body can be obtained with high productivity.

Another aspect of the present disclosure provides a separator for an electricity storage device, partially having an adhesive layer on at least one surface thereof, wherein the adhesive layer includes a first adhesive region and a second adhesive region, and a thickness T1 of the first adhesive region is 1.5 times or more a thickness T2 of the second adhesive region. Although the details will be described later, according to the separator for an electricity storage device with such an arrangement, the electricity storage device including the wound electrode body can be obtained with high productivity.

### BRIEF DESCRIPTION OF THE DRAWINGS

FIG. 1 is a flowchart for explaining methods for manufacturing a battery according to first and second embodiments.
FIG. 2 is an explanatory diagram for explaining a method for manufacturing a wound electrode body according to one embodiment.
FIG. 3 is a schematic diagram of a separator after the formation of an adhesive layer according to the embodiment, as viewed from the top surface.
FIG. 4 is a schematic diagram illustrating a wound body before a pressing step according to the embodiment.
FIG. 5 is a schematic diagram illustrating the wound body after the pressing step according to the embodiment.
FIG. 6 is a schematic diagram illustrating the state of the separator before a winding step according to the embodiment.
FIG. 7 is a schematic diagram illustrating the state of the separator after the winding step according to the embodiment.
FIG. 8 is a schematic diagram illustrating the state of the separator after the pressing step according to the embodiment.
FIG. 9 is a perspective view schematically illustrating the battery according to the embodiment.
FIG. 10 is a schematic longitudinal-sectional view taken along the line X-X in FIG. 9.
FIG. 11 is a schematic longitudinal-sectional view taken along the line XI-XI in FIG. 9.
FIG. 12 is a schematic cross-sectional view taken along the line XII-XII in FIG. 9.
FIG. 13 is a perspective view schematically illustrating a wound electrode body attached to a sealing plate.
FIG. 14 is a perspective view schematically illustrating a wound electrode body with a positive-electrode second current collector and a negative-electrode second current collector attached.
FIG. 15 is a schematic diagram illustrating a configuration of the wound electrode body of the battery according to the embodiment.
FIG. 16 is an enlarged diagram schematically illustrating interfaces between a positive electrode and the separator and between a negative electrode and the separator according to the embodiment.
FIG. 17 is a diagram corresponding to FIG. 3, according to a third embodiment.
FIG. 18 is a schematic longitudinal-sectional view taken along the line XVIII-XVIII in FIG. 17.
FIG. 19 is a diagram corresponding to FIG. 3, according to a fourth embodiment.
FIG. 20 is a schematic longitudinal-sectional view taken along the line XX-XX in FIG. 19.
FIG. 21 is a diagram corresponding to FIG. 3, according to a fifth embodiment.
FIG. 22 is a schematic longitudinal-sectional view taken along the line XXII-XXII in FIG. 21.

### DESCRIPTION OF THE EMBODIMENTS

Hereinafter, some embodiments of the technology disclosed herein will be described with reference to the accompanying figures. Obviously, the following description is not intended to limit the technology disclosed herein to the following embodiments. In the figures below, members and portions having the same action are labeled with the same reference signs as appropriate. In addition, the dimensional relationships (length, width, thickness, etc.) in each drawing do not reflect the actual dimensional relationships. Matters other than those specifically mentioned herein that are necessary for implementing the technology disclosed herein (e.g., general configuration and manufacturing processes of batteries that do not characterize the present invention) may be understood as design matters for those skilled in the art based on the prior art technologies in the field. The technology disclosed herein can be implemented based on the contents disclosed herein and the technical common sense in the field. The notation "Ato B" herein indicating a range means the meaning "A or more and B or less" and also implies the meaning of "more than A" and "less than B".

The "electricity storage device" as used herein refers to a device that can conduct charging and discharging. The electricity storage device encompasses batteries such as primary batteries and secondary batteries (e.g., nonaqueous electrolyte secondary batteries such as lithium-ion secondary batteries, nickel-metal hydride batteries), and capacitors (physical batteries) such as electric double-layer capacitors. An electrolyte may be any of a liquid electrolyte (electrolyte solution), gel electrolyte, and solid electrolyte.

The present technology will be described below by using, as an example, a lithium-ion secondary battery (hereinafter also simply referred to as a "battery 100"), which is one embodiment of the electricity storage device disclosed herein. Although a case where a first electrode is a positive electrode 22 and a second electrode is a negative electrode 24 will be described below, the technology disclosed herein can also be applied, for example, to a case where the first electrode is the negative electrode 24 and the second electrode is the positive electrode 22. A method of manufacturing a battery disclosed herein may further include other steps at optional stages, and a step can be deleted as appropriate unless otherwise described as essential. The order of the steps can also be changed as long as the effects of the technology disclosed herein are exhibited.

### <Overview>

The method of manufacturing a battery disclosed herein is a method of manufacturing the battery 100 which includes wound electrode bodies (here, wound electrode bodies 20a, 20b, and 20c) each having a flat shape, the wound electrode body including a first electrode (here, positive electrode 22) having a strip shape, a second electrode (here, negative electrode 24) having a strip shape, and separators 26 (here, first separator 26Si and second separator 26S₂) each having a strip shape, the first electrode and the second electrode being wound with the separators 26 interposed therebetween. The method includes: a winding step (step S2) of winding the first electrode (here, positive electrode 22) and the second electrode (here, negative electrode 24) with the separators 26 (here, first separator 26Si and second separator 26S₂) interposed therebetween to produce a wound body 20A; and a pressing step (step S3) of, after the winding step, pressing the wound body 20A to form the wound electrode bodies (here, wound electrode bodies 20a, 20b, and 20c), each having a flat shape. In the winding step, the separator partially having an adhesive layer 6 on at least one surface thereof is used. The adhesive layer 6 includes a first adhesive region 6A and a second adhesive region 6B, and a thickness T1 of the first adhesive region 6A is larger than a thickness T2 of the second adhesive region 6B.

As described above, for example, when the positional relationship between the electrode and the separator changes in the pressing step, strong adhesion between the electrode and the separator may lead to an inappropriate change in the positional relationship between the electrode and the separator. It is found that this may cause distortion, wrinkles, or the like in the separator. In contrast, according to the method of manufacturing the battery 100 as described above, in the winding step, the electrode (here, positive electrode 22) and the separator 26 do not intentionally adhere to each other strongly, but in the pressing step, the electrode and the separator 26 can be brought into a state of firstly adhering to each other strongly. In more detail, in the winding step, the first adhesive region 6A of the separator 26 with a larger thickness contacts the electrode, but in the pressing step, the second adhesive region 6B with a smaller thickness, which has not contacted the electrode in the winding step, is brought into contact with the electrode. With such an arrangement, in the winding step, the electrode and the separator 26 do not intentionally adhere to each other strongly, but in the pressing step, the electrode and the separator 26 can be brought into a state of firstly adhering to each other strongly. Therefore, in the pressing step, the positional relationship between the electrode and the separator 26 can change appropriately when this relationship changes. This can suitably suppress the occurrence of distortion, wrinkles, or the like in the separator 26. Since the separator 26 having the first adhesive region 6A and the electrode (here, positive electrode 22) adhere to each other in the winding step, the misalignment of winding of the wound body 20A can be suitably suppressed (specifically, the misalignment as used herein means the misalignment between the separator 26 and the electrode within the wound body 20A, which easily occurs particularly when pulling out the wound body 20Afrom a winding core 3). That is, according to the method of manufacturing the battery 100 described above, the battery 100 having the wound electrode bodies 20a, 20b, and 20c can be obtained with high productivity. Hereinafter, a description will be given by using two specific embodiments as examples.

### <First Embodiment>

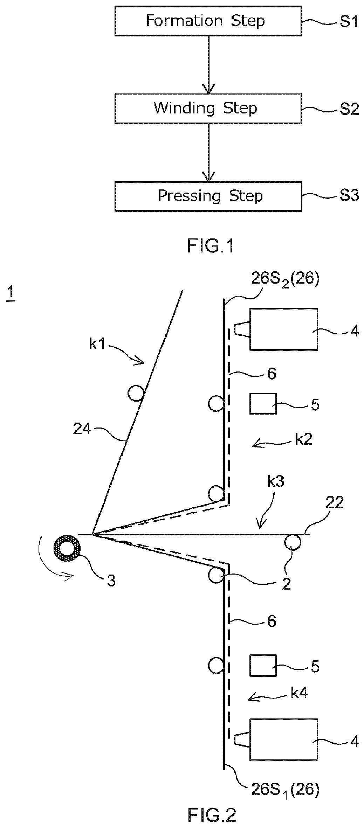

First, the method of manufacturing the battery according to a first embodiment will be described with reference to the flow chart of FIG. 1. First, the method of manufacturing the battery 100 according to the first embodiment is a method of manufacturing the battery 100 which includes the wound electrode bodies (here, wound electrode bodies 20a, 20b, and 20c) each having a flat shape, the wound electrode body including the first electrode (here, positive electrode 22) having a strip shape, the second electrode (here, negative electrode 24) having a strip shape, and separators 26 (here, first separator 26Si and second separator 26S₂), each having a strip shape, the first electrode and the second electrode being wound with the separators 26 interposed therebetween. As illustrated in FIG. 1, the method of manufacturing the battery 100 according to the first embodiment includes: the winding step (step S2) of winding the first electrode (here, positive electrode 22) and the second electrode (here, negative electrode 24) with the separator 26 interposed therebeween to produce the wound body 20A; and the pressing step (step S3) of pressing the wound body 20A to form the wound electrode bodies (here, wound electrode bodies 20a, 20b, and 20c), each having the flat shape after the winding step. In the winding step, the separator 26 partially having the adhesive layer 6 on at least one surface thereof is used. The adhesive layer 6 includes the first adhesive region 6A and the second adhesive region 6B. The thickness T1 of the first adhesive region 6A is 1.5 times or more the thickness T2 of the second adhesive region 6B.

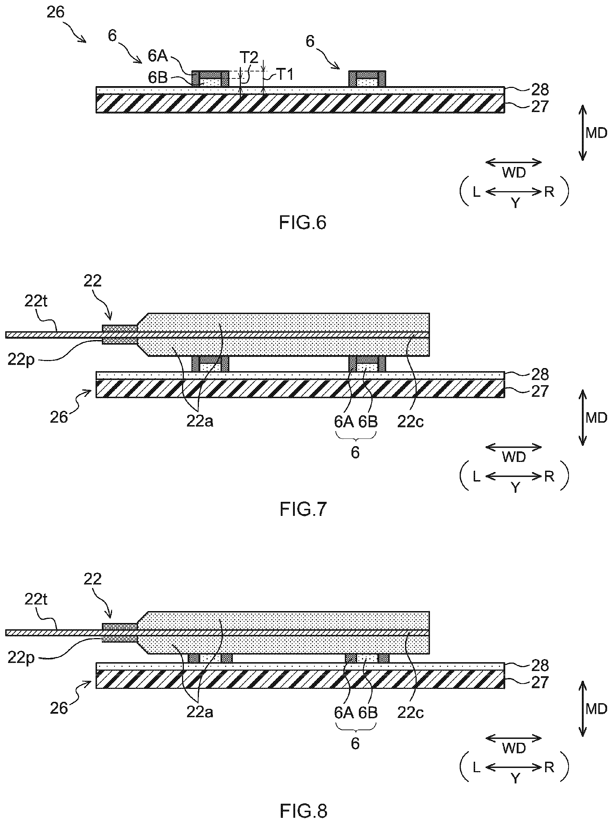

As described above, for example, when the positional relationship between the electrode and the separator changes in the pressing step, strong adhesion between the electrode and the separator may lead to an inappropriate change in the positional relationship between the electrode and the separator. It is found that this may cause distortion, wrinkles, or the like in the separator. In contrast, according to the method of manufacturing the battery 100 as described above, in the winding step, the electrode (here, positive electrode 22) and the separator 26 do not intentionally adhere to each other strongly, but in the pressing step, the electrode and the separator 26 can be brought into a state of firstly adhering to each other strongly. In more detail, in the winding step, the first adhesive region 6A of the separator 26 with a larger thickness contacts the electrode (see FIG. 7), but in the pressing step, the second adhesive region 6B with a smaller thickness, in addition to the first adhesive region 6A, is brought into contact with the electrode (see FIG. 8). With such an arrangement, in the winding step, the electrode and the separator 26 do not intentionally adhere to each other strongly, but in the pressing step, the electrode and the separator 26 can be brought into a state of firstly adhering to each other strongly. Therefore, in the pressing step, the positional relationship between the electrode and the separator 26 can change appropriately when this relationship changes. This can suitably suppress the occurrence of distortion, wrinkles, or the like in the separator 26. Since the separator 26 having the first adhesive region 6A and the electrode (here, positive electrode 22) adhere to each other in the winding step, the misalignment of winding of the wound body 20A can be suitably suppressed. That is, according to the method of manufacturing the battery 100 described above, the battery 100 having the wound electrode bodies 20a, 20b, and 20c can be obtained with high productivity.

The method of manufacturing the battery 100 according to the present embodiment will be described below by referring to an electrode body manufacturing apparatus 1 implementing the method of manufacturing the battery 100. In the following, a case where the dot-shaped adhesive layer 6 is arranged on one surface of each of the first separator 26Si and the second separator 26S₂ will be described. In the technology disclosed herein, the separator 26 in which the adhesive layer 6 is arranged in advance can be used. However, a case where the adhesive layer 6 is formed on the surface of the separator 26 by an adhesive application section 4 will be described below. Accordingly, as illustrated in FIG. 1, the method of manufacturing the battery 100 according to the present embodiment further includes a formation step (step S1) before the winding step (step S2) described above. In other embodiments, such a step may not be included.

FIG. 2 is a schematic diagram illustrating a configuration of the electrode body manufacturing apparatus 1 according to the embodiment. As illustrated in FIG. 2, the electrode body manufacturing apparatus 1 according to the present embodiment includes a plurality of (here, six) rollers 2, the winding core 3, the adhesive application section 4, and a drying section 5. In the present embodiment, the electrode body manufacturing apparatus 1 also includes a cutter, a pressing jig, and a controller, which are not illustrated. Here, the cutter is a cutter that cuts the first separator 26Si and the second separator 26S₂. The pressing jig is a jig that presses the first separator 26Si and the second separator 26S₂ against the winding core 3. Each component of the electrode body manufacturing apparatus 1 has a required actuator as appropriate. The controller is configured to control each component of the electrode body manufacturing apparatus 1 so that a required operation is executed at predetermined timing according to a preset program. The controller can be embodied by a computer, for example, a microcontroller.

Each of the positive electrode 22, the negative electrode 24, the first separator 26S₁, and the second separator 26S₂ is prepared in a state of being wound on a reel (not shown) or the like. The positive electrode 22, negative electrode 24, first separator 26Si and second separator 26S₂ are transported along predetermined transport paths k3, k1, k4, and k2, respectively. The transport path k1 is a path along which the negative electrode 24 is fed from the reel (not illustrated) toward the winding core 3. The transport path k2 is a path along which the second separator 26S₂ is fed from the reel (not illustrated) toward the winding core 3. The transport path k3 is a path along which the positive electrode 22 is fed from the reel (not illustrated) toward the winding core 3. The transport path k4 is a path along which the first separator 26Si is fed from the reel (not illustrated) toward the winding core 3. Each of the transport paths k1 to k4 may have a dancer roll mechanism for removing looseness of the fed positive electrode 22, negative electrode 24, first separator 26Si, and second separator 26S₂, and a tensioner for adjusting the tension thereof, as appropriate.

The respective rollers 2 are arranged on the transport paths k1 to k4 for the positive electrode 22, negative electrode 24, first separator 26Si, and second separator 26S₂. The rollers 2 are embodied as an example of a transport device. The rollers 2 are arranged at predetermined positions so as to define the respective transport paths k1 to k4. The positive electrode 22, the negative electrode 24, the first separator 26Si, and the second separator 26S₂ are each transported by the rollers 2. In the present embodiment, the number of rollers 2 is six, but in other embodiments, the number of rollers 2 may be other than six.

The winding core 3 has the function of holding the positive electrode 22, negative electrode 24, first separator 26Si, and second separator 26S₂ that are wound around its side peripheral surface. The winding core 3 is a substantially cylindrical member here, but a flat winding core may be used when winding into a flat shape. Although the winding core 3 used here is an undivided winding core, winding cores divided along the radial direction or a winding core with a variable diameter may be used.

The winding core 3 may further have a suction hole, a groove, or the like. The suction holes are, for example, holes for adsorbing the first separator 26Si and the second separator 26S₂ that are wound around the side peripheral surface of the winding core 3. The shape of the suction hole in plan view may be circular or square. Alternatively, the suction hole may be slit-shaped. The suction hole is typically provided in a suction flow path, which is a flow path formed inside the winding core 3 and leading to the suction hole. The suction path is a flow path for creating a negative pressure in the suction hole. The suction path is desirably configured to be suitably connected to a vacuum line externally installed and to thereby form a negative pressure. The groove can function as a receiving portion where a cutter blade is lowered to contact the first separator 26Si and the second separator 26S₂ when these separators are cut. This suppresses damage to the winding core or cutter due to the contact between the winding core 3 and the cutter blade.

The adhesive application section 4 applies an adhesive layer slurry to at least one surface of the separator 26 (here, first separator 26Si and second separator 26S₂) along a transport direction. The adhesive application section 4 is configured to be able to apply a desired amount of the adhesive layer slurry to desired areas of the first separator 26Si and the second separator 26S₂. The adhesive layer slurry contains, for example, an adhesive layer binder (adhesive) described later, and at least one of a solvent and a dispersion medium. The "slurry" can encompass ink, paste, or the like.

The solvent contained in the adhesive layer slurry may be any liquid capable of dissolving the adhesive layer binder (adhesive). The dispersion medium contained in the adhesive layer slurry should be a liquid capable of dispersing the adhesive layer binder (adhesive). Such solvents and dispersion media include water, aqueous solvents, organic solvents, and mixed solvents thereof. For example, from the viewpoint of reducing environmental load, so-called aqueous solvents are suitably used. In this case, water or water-based mixed solvents can be used. As a solvent component, other than water, which constitutes the mixed solvent, one or more organic solvents (lower alcohols, lower ketones, etc.) that can be homogeneously mixed with water can be selected as appropriate. For example, an aqueous solvent in which 80% by mass or more (more preferably 90% by mass or more, even more preferably 95% by mass or more) of the aqueous solvent is water is preferably used. A particularly preferred example thereof is an aqueous solvent that is substantially composed of water. The solvent of the adhesive layer slurry is not limited to so-called aqueous solvents, but may also be so-called organic solvents. Examples of organic solvents include alcohol-based solvents, ketone-based solvents, ester-based solvents, halogen-based solvents, hydrocarbon-based solvents, nitrogen-containing solvents, and the like. These may be used alone or in combination of two or more kinds. The boiling point of the solvent and dispersion medium is preferably, for example, about 50°C to 200°C, or about 100°C to 150°C from the viewpoint of easily removing the solvent during drying after the application of the adhesive layer slurry. If the boiling point is too low, the stability of application may be impaired. For example, the adhesive layer slurry may dry out before the completion of the application. Thus, the boiling point is preferably selected as appropriate, depending on the application method. The solvent/dispersion medium ratio in the adhesive layer slurry is adjusted as appropriate, depending on the application method. For example, in the case of application methods such as gravure printing and inkjet printing, the ratio by weight is preferably about 50 to 99%, and more preferably about 80 to 95%. The adhesive layer binder (adhesive) may be dissolved or dispersed in the adhesive layer slurry. When the adhesive layer slurry is a solution in which the adhesive is dissolved, the adhesive may excessively seep into a heat resistance layer 28 described later. Thus, the adhesive layer slurry is preferably a dispersion liquid of the adhesive. Although not particularly limited, the content of the solvent and dispersion medium in the adhesive layer slurry can be, for example, about 50 to 99% by mass (preferably about 80 to 95% by mass) when the total mass of the adhesive layer slurry is assumed to be 100% by mass.

Examples of adhesive layer binders (adhesives) include acrylic resins, fluorine resins, rubber resins, urethane resins, silicone resins, epoxy resins, and the like. These may be used alone or in combination of two or more kinds. An example of a rubber resin is styrene-butadiene rubber (SBR). Fluorine resins and acrylic resins are also preferable because of their high flexibility and more suitable adhesiveness to the electrode (here, positive electrode 22). Examples of fluorine resins include polyvinylidene fluoride (PVdF), polytetrafluoroethylene (PTFE), and the like. The kind of the adhesive layer binder may be the same as or different from the heat-resistant layer binder described later. From the viewpoint of ease of handling, the adhesive layer binder preferably exhibits adherence (adhesiveness) at ordinary temperature (e.g., about 25°C). Meanwhile, the adhesive layer binder may be one that exhibits adherence (adhesiveness) through heating, pressurization, or the like. Here, the adherence (adhesiveness) can mean, for example, a peel strength of 0.00001 N/20mm to 0.1 N/20mm (preferably 0.0001 N/20mm to 0.01 N/20mm) in a 90° peel test based on JIS Z 0237:2009. Although not particularly limited, the content of the adhesive layer binder in the adhesive layer slurry can be, for example, about 1 to 50% by mass (preferably, about 5 to 20% by mass) when the total mass of the adhesive layer slurry is assumed to be 100% by mass.

The adhesive layer binder (adhesive) used may be, for example, a resin that causes the electrode (here, positive electrode 22) to adhere to the separator 26 at ordinary temperature (e.g., about 25°C) and/or low pressure (e.g., 0.1 MPa or lower, preferably 0.05 MPa or higher). Such a resin preferably has, for example, a glass transition point of ordinary temperature or lower, more preferable 0°C or lower, and even more preferably -10°C or lower. The glass transition point of the resin may be -20°C or higher, for example. Examples of the resin include PVdF, SBR, acrylic resins, and the like, which have a low glass transition point as described above. Alternatively, the adhesive layer binder (adhesive) used may be a resin that has low adhesiveness (adherence) at room temperature and allows the electrode (here, positive electrode 22) and the separator 26 to adhere to each other when heated (for example, heating at 50°C or higher, 70°C or higher, and preferably 150°C or lower, or 100°C or lower) and/or when pressurized (for example, a pressure of 0.1 MPa or higher, 1 MPa or higher, and preferably 20 MPa or lower, or 10 MPa or lower). This resin preferably has, for example, a glass transition point of ordinary temperature or higher, preferable 30°C or higher, more preferably 40°C or higher, and even more preferably 50°C or higher. The glass transition point of the resin may be 60°C or lower, for example. Examples of the resin include PVdF, acrylic resins, epoxy resins, and the like, which have a high glass transition point as described above. The glass transition point can be measured based on a method specified in, for example, JIS K 7121. The resin that allows the electrode (here, positive electrode 22) to adhere to the separator 26 through irradiation with energy such as light may be used.

Although not particularly limited, a 90° peel strength between the electrode (here, positive electrode 22) and the separator 26 having the adhesive layer 6 (first adhesive region 6A and the second adhesive region 6B) is preferably, for example, 0.00001 N/20mm to 0.1 N/20mm (preferably 0.0001 N/20mm to 0.01 N/20mm). The 90° peel test can be measured, for example, by the following method. First, the separator 26 having the adhesive layer 6 and the electrode (here, positive electrode 22) are each cut out into a piece with the size of a length of 2.0 cm and a width of 7.0 cm. These cut separator 26 and electrode are then arranged to overlap each other. Next, the separator 26 and electrode are bent so as to form an angle of 90° therebetween. Then, by using a tensile tester or the like, one side of the separator 26 and one side of the electrode which are opened at 90° are grasped and pulled at a tensile speed of 50 mm/min, and thus the strength between the separator 26 and the electrode is measured when both of them are peeled apart. In this way, the peel strength can be measured.

The adhesive layer slurry may contain one or more additives such as a known thickener, surfactant, and inorganic filler (e.g., alumina, titania, boehmite) as long as the effects of the technology disclosed herein are not inhibited. When the adhesive layer slurry contains such an inorganic filler, for example, the inorganic filler content is preferably about 5 to 20% by mass (preferably, about 10 to 15% by mass) when the total mass of the adhesive layer slurry is 100%. The viscosity of the adhesive layer slurry is not particularly limited as long as the effects of the technology disclosed herein are exhibited, but can be generally about 10 to 100 mPa • s (e.g., about 20 to 50 mPa·s). Such a viscosity can be measured, for example, by a commercially available viscometer.

As the adhesive application section 4, various types of adhesive application components can be used; examples thereof include various intaglio printing machines such as inkjet printing machines, gravure roll coaters and spray coaters, die coaters such as slit coaters, comma coaters and cap coaters (capillary coaters: CAP coaters), lip coaters, and calendar machines.

The drying section 5 removes at least one of the solvent and the dispersion medium from the adhesive layer slurry. The drying section 5 can volatilize at least one of the solvent and the dispersion medium from the separator 26. A drying method using the drying section 5 is not particularly limited, and examples of usable drying methods include circulation drying, drying by heating, vacuum drying, and the like. For example, for drying by heating, the heating temperature may be about 40°C to 300°C (e.g., 50°C to 200°C).

Subsequently, the method of manufacturing the battery 100 according to the present embodiment will be described. As described above, the method of manufacturing the battery 100 according to the present embodiment includes a formation step (step S1), a winding step (step S2), and a pressing step (step S3). Each step is described below.

### (Step S1: Formation Step)

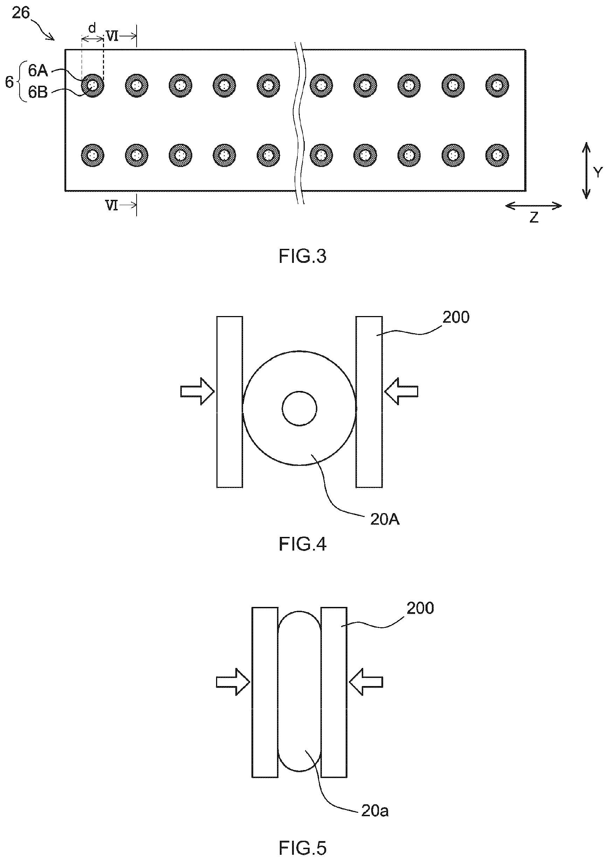

The present step is performed before the winding step to form the adhesive layer on at least one of the surfaces of the separator 26. In this step, an adhesive layer slurry containing an adhesive and at least one of a solvent (solvent) and a dispersion medium is arranged (applied) onto at least one surface of the separator 26. As illustrated in FIG. 2, in the present embodiment, the adhesive layer slurry is arranged on one surface of each of the first and second separators 26Si and 26S₂. FIG. 3 is a schematic diagram of the separator 26 after the formation of the adhesive layer 6 according to the present embodiment, as viewed from the top surface. As illustrated in FIG. 3, in the present embodiment, one continuous adhesive layer 6 having the first adhesive region 6A and the second adhesive region 6B is finally formed on the surface of the separator 26. The adhesive layer 6 is here in the form of circular dots in the plan view of the separator 26, and has the first adhesive region 6A corresponding to its outer peripheral region and the second adhesive region 6B corresponding to its center region. The thickness of the first adhesive region 6A (length in the MD direction in FIG. 6) is different from the thickness of the second adhesive region (length in the MD direction in FIG. 6). For example, the dot-shaped adhesive layer 6 can be formed on the surface of the separator 26 by using the adhesive application section 4 which has an inkjet printing function and has a dual nozzle structure with different diameters. However, this is illustrative only, and the adhesive layer slurry may be arranged on the surface of the separator 26 by other methods.

In a preferred embodiment, the method further includes a removal step of removing at least one of the solvent and the dispersion medium from the adhesive layer slurry. As illustrated in FIG. 2, in the present embodiment, the adhesive layer 6 arranged on the surface of the separator 26 in the formation step is dried by the drying section 5. Such removal of the solvent or dispersion medium can suitably reduce the amount of solvent or dispersion medium remaining in the adhesive layer 6 during electrode body production. The phrase "removing at least one of the solvent and the dispersion medium from the adhesive layer slurry" can mean that when the total mass of the solvent and dispersion medium in the adhesive layer slurry is assumed to be 100% by mass, the solvent and dispersion medium are removed by, for example, 70% by mass or more, 80% by mass or more, preferably 90% by mass or more, 95% by mass or more, or 99% by mass or more (particularly preferably, 100% by mass). In the technology disclosed herein, in this step, the solvent and dispersion medium do not need to be removed completely, and some of them may remain.

Through the formation step, a separator 26 for an electricity storage device can be obtained, in which the separator 26 partly has the adhesive layer 6 on at least one surface thereof, and the adhesive layer 6 has the first adhesive region 6A and the second adhesive region 6B, with the thickness T1 of the first adhesive region 6A being 1.5 times or more the thickness T2 of the second adhesive region 6B. As illustrated in FIG. 3, in the present embodiment, the adhesive layer 6 is arranged on one surface of the separator 26 (here, each of the first and second separators 26Si and 26S₂). With this arrangement, in the winding step, the first adhesive region 6A of the separator 26 with a larger thickness contacts the electrode (here, positive electrode 22), but in the pressing step, in addition to the first adhesive region 6A, the second adhesive region 6B with a smaller thickness is brought into contact with the electrode (here, positive electrode 22). In the winding step, the electrode and the separator 26 do not intentionally adhere to each other strongly, but in the pressing step, the electrode and the separator 26 can be brought into a state of firstly adhering to each other strongly. Therefore, in the pressing step, the positional relationship between the electrode and the separator 26 changes appropriately when this relationship changes. This can suitably suppress the occurrence of distortion, wrinkles, or the like in the separator 26. Since the separator 26 having the first adhesive region 6A and the electrode (here, positive electrode 22) adhere to each other in the winding step, the misalignment of winding of the wound body 20A can be suitably suppressed. That is, according to the method of manufacturing the battery 100 described above, the battery 100 having the wound electrode bodies 20a, 20b, and 20c can be obtained with high productivity. The adhesive layer 6 partially arranged on the surface of the separator 26 means the existence of a region on the surface of the separator 26 in which the adhesive layer 6 is not arranged. The adhesive layer 6 is preferably formed in a pattern across a wide range of the separator 26.

As illustrated in FIG. 3, in the present embodiment, the adhesive layer 6 is arranged in dots in the plan view of the separator 26. Here, the shape of the dot-shaped adhesive layer 6 (in detail, the outer shape of the first adhesive region 6A) in plan view is circular, but is not limited thereto. In other embodiments, the shape of the dot of the dot-shaped adhesive layer 6 in the plan view can be an elliptical shape, a rectangular shape, a polygonal shape, or a combination thereof. In the present embodiment, the adhesive layers 6 are arranged two by two in the short side direction (Y direction in FIG. 3) of the strip-shaped separator 26, but they are not limited thereto. In other embodiments, the adhesive layer 6 may be arranged one by one in the short side direction (Y direction in FIG. 3) of the separator 26, or may be arranged three (or more) by three (or more). In the present embodiment, the shape of the second adhesive region 6B is circular in the plan view of the separator 26, but is not limited thereto. In other embodiments, the shape of the second adhesive region 6B can be an ellipse shape, a rectangular shape, or the other like. Alternatively, in another embodiment, the adhesive layer 6 may be arranged linearly in the plan view of the separator 26. For example, third and fourth embodiments described later are examples of cases in which the adhesive layer is arranged linearly. As in the present embodiment, the second adhesive region 6B may be arranged at the center, and the first adhesive region 6A may be arranged on its outer peripheral side. In another embodiment, the first adhesive region 6A may be arranged at the center, and the second adhesive region 6B may be on its outer peripheral side.

The first adhesive region 6A and the second adhesive region 6B included in the adhesive layer 6 are preferably composed mainly of the adhesive layer binder as described above. Here, the phrase "being composed mainly of an adhesive layer binder" can mean, for example, the adhesive layer binder content being, for example, 50% by volume or more, 60% by volume or more, preferably 70% by volume or more, or 80% by volume or more, more preferably 90% by volume or more, or 95% by volume or more (or may be even 100% by volume) when the total content of the adhesive layer 6 is assumed to be 100% by volume. Thus, predetermined adhesiveness to the electrode (here, positive electrode 22) can be exhibited reliably. In a preferred embodiment, a main component of the resin constituting the first adhesive region 6A and a main component of the resin constituting the second adhesive region 6B are preferably the same. Such an arrangement is preferred because the adhesive layer 6 can be easily formed in the formation step. In another embodiment, a main component of the resin constituting the first adhesive region 6A and a main component of the resin constituting the second adhesive region 6B may be different from each other. Here, the "main component of the resin constituting the first adhesive region (second adhesive region)" can mean, for example, a resin whose content is, for example, 50% by volume or more, 60% by volume or more, preferably 70% by volume or more, or 80% by volume or more, more preferably 90% by volume or more, or 95% by volume or more (or may be even 100% by volume) when the content of the whole resin constituting the first adhesive region (second adhesive region) is assumed to be 100% by volume.

In addition to the adhesive layer binder, the first and second adhesive regions 6A and 6B included in the adhesive layer 6 may contain other materials (e.g., inorganic fillers such as alumina, titania, and boehmite) as described above. In a case where the adhesive layer 6 contains the inorganic filler, the inorganic filler content is preferably, for example, about 10 to 90% by mass (preferably, about 20 to 80% by mass) when the total mass of the adhesive layer 6 is 100% by mass.

The ratio of a formed area of the adhesive layer 6 on one surface of the separator 26 to an area of the one surface of the separator 26 (i.e., formed area of the adhesive layer on one surface of the separator/area of the one surface of the separator) in the plan view is not particularly limited as long as the effects of the technology disclosed herein are exhibited. The upper limit of the ratio is, for example, 0.8 or less, and from the viewpoint of input and output characteristics of the battery 100, it is preferably 0.5 or less, 0.3 or less, 0.2 or less, or 0.1 or less. The lower limit of the ratio is, for example, 0.001 or more, and from the viewpoint of suitably securing an adhesive force between the separator 26 and the electrode and suitably suppressing swelling of the wound electrode body in terms of its thickness, it is preferably 0.005 or more, 0.01 or more, or 0.03 or more, and more preferably 0.05 or more. That is, when the (formed area of the adhesive layer on one surface of the separator/area of the one surface of the separator) is, for example, 0.005 to 0.5, the above effects can be suitably achieved.

The ratio of the formed area of the first adhesive region 6A to the area of the adhesive layer 6 (here, total area of the first and second adhesive regions 6A and 6B) in the plan view of the separator 26 (i.e., formed area of the first adhesive region 6A/area of the adhesive layer) is not particularly limited as long as the effects of the technology disclosed herein are exhibited. The lower limit of the ratio is, for example, 0.1 or more, and from the viewpoint of suitably suppressing misalignment of winding or the like, it is preferably 0.2 or more, and may be 0.3 or more, 0.4 or more, or 0.5 or more. The upper limit of the ratio is, for example, 0.9 or less, and from the viewpoint of suitably securing an adhesive force between the second adhesive region 6B and the electrode in the pressing step described later and suitably suppressing misalignment of the winding, it is preferably 0.8 or less, and may be 0.7 or less, or 0.6 or less. That is, for example, when the value of (formed area of the first adhesive region 6A/area of the adhesive layer) is 0.2 to 0.8, the above effects can be suitably achieved.

The diameter (diameter corresponding to d in FIG. 3) of one dot of the dot-shaped adhesive layer 6 is not particularly limited as long as the effects of the technology disclosed herein are exhibited. The lower limit of d is, for example, 10 µm or more, and from the viewpoint of suitably securing the adhesive force between the separator 26 and the electrode, the lower limit of d is preferably 50 µm or more, more preferably 75 µm or more, and particularly preferably 100 µm or more. The upper limit of the d is, for example, 600 µm or less, and from the viewpoint of uniformity of a charge-discharge reaction in the battery 100, suppression of Li deposition, and the like, it is preferably 500 µm or less, more preferably 300 µm or less, or 200 µm or less. That is, in the winding step, the diameter of one dot of the dot-shaped adhesive layer 6 is preferably, for example, 50 µm to 500 µm.

Here, FIG. 6 is a schematic diagram illustrating the state of the separator before the winding step according to one embodiment. FIG. 6 can also be said to be a schematic longitudinal-sectional view taken along the line VI-VI in FIG. 3. In the present embodiment, the adhesive layer 6 is arranged on the side of each of the first and second separators 26Si and 26S₂ facing the positive electrode 22, but only the first separator 26Si and the positive electrode 22 are described in FIG. 6 for ease of explanation. However, the same applies to the second separator 26S₂ and positive electrode 22. In the winding step described later (in other words, in the separator 26 used in the winding step described later, or after the formation step), the thickness of one dot of the dot-shaped adhesive layer 6 (the length in the MD direction in FIG. 6, corresponding to T1 in FIG. 6) is not particularly limited as long as the effects of the technology disclosed herein are exhibited. The lower limit of T1 is preferably 0.1 µm or more, more preferably 0.2 µm or more, and even more preferably 0.5 µm or more. The upper limit of T1 is preferably 10 µm or less, more preferably 5 µm or less, and even more preferably 3 µm or less. That is, the T1 is preferably within the range of 0.1 µm to 10 µm, for example. Setting the T1 within the range described above is preferred from the viewpoints of securing the adhesiveness of the adhesive layer 6, uniformity of the charge-discharge reaction in the battery 100, suppression of Li deposition, and the like.

Here, as described above, the thickness T1 of the first adhesive region 6A is 1.5 times or more the thickness T2 of the second adhesive region 6B. That is, regarding the outer peripheral region and center region of the adhesive layer 6, when comparing the thickness of at least a part of the center region with the thickness of at least a part of its outer peripheral region, the thickness of the outer peripheral region is 1.5 times or more the thickness of the center region. From the viewpoint of more suitably achieving the effects described above, the thickness T1 of the first adhesive region 6A may be 2 times or more, 2.5 times or more, or 3 times or more the thickness T2 of the second adhesive region 6B. The thickness T1 of the first adhesive region 6A may be, for example, 5 times or less, or 4 times or less the thickness T2 of the second adhesive region 6B.

Although not particularly limited, the area of a region surrounded by the outer periphery of one dot of the dot-shaped adhesive layer 6 in the plan view of the separator 26 is, for example, 0.5 mm² or less, preferably 0.25 mm² or less, and more preferably 0.1 mm² or less. The lower limit of the area of one dot of the dot-shaped adhesive layer 6 is, for example, 0.01 mm² or more, and preferably 0.05 mm² or more.

Although not particularly limited, the basis weight of the adhesive layer 6 on one surface of the separator 26 is, for example, 0.005 g/m² or more, preferably 0.01 g/m² or more, and more preferably 0.02 g/m² or more. The upper limit of the basis weight of the adhesive layer 6 is, for example, 2.0 g/m² or less, preferably 1.0 g/m² or less, and more preferably 0.05 g/m² or less. The term "basis weight" refers to a value obtained by dividing the mass of the adhesive layer by the area of its formed region (i.e., mass of adhesive layer/area of formed region).

### (Step S2: Winding Step)

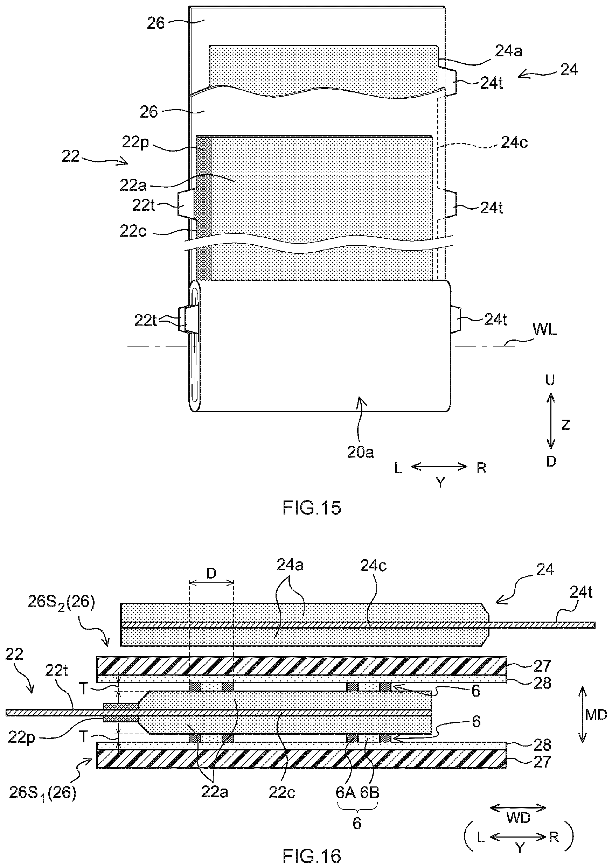

As described above, in this step, the wound electrode body is produced as the electrode body in the present embodiment. In the winding step, the strip-shaped first electrode (here, positive electrode 22) and the strip-shaped second electrode (here, negative electrode 24) are wound with the strip-shaped separators 26 (here, first separator 26Si and second separator 26S₂) interposed therebetween to produce the wound body 20A. As illustrated in FIG. 2, in the present embodiment, the negative electrode 24, second separator 26S₂, positive electrode 22, and first separator 26Si are transported to the winding core 3 on the respective transport paths k1 to k4, respectively, and wound onto the winding core 3 to produce the wound body 20A. Although a cylindrical core is used as the winding core 3 here, the winding core 3 is not limited thereto, and a flat-shaped core may be used, for example. The cross-sectional shape of the wound body 20A may be flat as in the present embodiment, or other shapes such as a perfect circular shape, an elliptical shape, or a track shape. The respective sheets are wound such that only positive electrode tabs 22t of the positive electrode 22 protrude from one side edge thereof (left side in FIG. 15) in the width direction Y, and only negative electrode tabs 24t of the negative electrode 24 protrude from the other side edge thereof (right side in FIG. 15). The number of turns in the winding of the sheet is preferably adjusted as appropriate in consideration of the performance of the target battery 100, its manufacturing efficiency, and the like. In some embodiments, such a number of turns in the winding can be 20 or more or 30 or more. The temperature in the winding step is preferably 50°C or lower, more preferably 40°C or lower, and even more preferably 35°C or lower. The above winding step is preferably performed at a temperature of 10°C or higher. As the first adhesive region 6A and the second adhesive region 6B, for example, one with adherence (adhesiveness) under the temperature condition in the winding step can be used.

### (Step S3: Pressing Step)

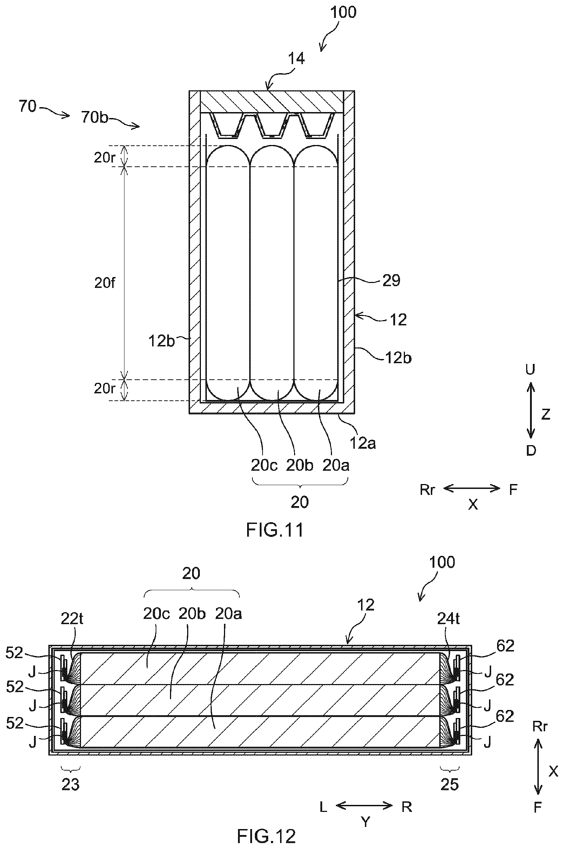

As described above, in this step, after the winding step, the wound body 20A is press-formed to form the wound electrode body 20a having a flat shape. With such an arrangement, the separator 26 and the electrode can adhere to each other more suitably. Also, with this arrangement, the increase in thickness of the wound electrode body 20a (20b, 20c) after the pressing step can be suitably suppressed, and the insertability of the wound electrode body into a case 10 can be suitably improved. In this embodiment, the wound electrode body 20A obtained in the winding step is pressed to form the wound electrode body 20a having a flat shape. FIG. 4 is a schematic diagram illustrating the wound body 20Abefore the pressing step according to the present embodiment. FIG. 5 is a schematic diagram illustrating the wound body 20A after the pressing step according to the present embodiment. First, as illustrated in FIG. 4, the wound body 20A is arranged in a press machine 200 having a pair of opposed pressing surfaces, and then pressed in the direction indicated by the white arrow to obtain the wound electrode body 20a having a flat shape. Here, the pressing pressure can be in the range of 0.1 MPa to 20 MPa (preferably 5 MPa to 10 MPa), for example. Such pressing may be pressing without heating, heated pressing, or both. In the case of the heated pressing, the heating temperature can be in the range of 50°C to 100°C (preferably 70°C to 90°C), for example. As illustrated in FIG. 11, the flat-shaped wound electrode body 20a after the press forming has a pair of curved portions 20r, each having a curved outer surface, and flat portions 20f, each having a flat outer surface connecting the pair of curved portions 20r. The flat-shaped wound electrode body 20a obtained after the press forming has, at one end thereof in the width direction Y, a positive electrode tab group 23 of the stacked positive electrode tabs 22t, and at the other end thereof, a negative electrode tab group 25 of the stacked negative electrode tabs 24t. A core portion in which a positive-electrode active material layer 22a and a negative-electrode active material layer 24a face each other is formed at the center of the wound electrode body in the width direction Y

In a preferred embodiment, the formation step is performed immediately before the winding step. After the formation step, the winding step is preferably performed continuously without winding the separator 26 onto a separator roller or the like (in other words, in a state where the separator 26 is being developed). As illustrated in FIG. 2, in the present embodiment, the formation and arrangement of the adhesive layer 6 is conducted immediately before the winding step of winding the positive electrode 22 and the negative electrode 24 with the separators 26 (here, first separator 26Si and second separator 26S₂) interposed therebetween to produce the wounded body 20A. This configuration is preferred because a side reaction is less likely to occur in the adhesive layer 6, and dust and other particles are less likely to adhere to the adhesive layer 6. The time from the formation step to the winding step is, for example, 60 minutes or less (preferably less than 60 minutes), preferably 30 minutes or less, 20 minutes or less (e.g., less than 20 minutes), more preferably 10 minutes or less, and particularly preferably 5 minutes or less (e.g., less than 5 minutes). The minimum distance from the position where the formation step is performed (e.g., the position of the adhesive application section 4 in FIG. 2) to the position where the winding step is performed (e.g., the position of the winding core 3 in FIG. 2) is, for example, 50 m or less (preferably, less than 50 m), preferably 30 m or less, more preferably 10 m or less (e.g., less than 10 m), particularly preferably 5 m or less, or 3 m or less (e.g., less than 3 m). However, it is not limited thereto.

In a preferred embodiment, in the winding step, the separator 26 and the first electrode (here, positive electrode 22) adhere to each other with the first adhesive region 6A, and in the winding step, the second adhesive region 6B and the first electrode (here, positive electrode 22) adhere to each other with a force weaker than an adhesive force between the first adhesive region 6A and the first electrode (here, positive electrode 22), or the second adhesive region 6B and the first electrode (here, positive electrode 22) do not adhere to each other. In the pressing step, the second adhesive region 6B and the first electrode (here, positive electrode 22) adhere to each other more strongly than in a state before the pressing step. With such an arrangement, the effects of the technology disclosed herein can be obtained suitably. Although not particularly limited, in a case where the second adhesive region 6B and the first electrode adhere to each other in the winding step with the force weaker than the adhesive force between the first adhesive region 6A and the first electrode, the adhesive force (peel strength) of the first adhesive region 6A to the first electrode when applying a pressing force (e.g., about 0.01 MPa to 0.1 MPa) in the winding step is, for example, 0.00001 N/20mm to 0.1 N/20mm (preferably, 0.0001 N/20mm to 0.01 N/20mm). The adhesive force (peel strength) of the second adhesive region 6B to the first electrode (here, positive electrode 22) can be, for example, 0 N/20mm to 0.00001 N/20mm (preferably, 0 N/20mm to 0.000001 N/20mm). A difference between the adhesive force (peel strength) of the first adhesive region 6Ato the first electrode and the adhesive force (peel strength) of the second adhesive region 6B to the first electrode in the winding step is, for example, 0.00001 N/20 mm to 0.1 N/20 mm (preferably, 0.0001 N/20 mm to 0.01 N/20 mm). Although not particularly limited, a difference in the peel strength of the second adhesive region 6B before and after the above pressing step can be, for example, 0.00001 N/20 mm to 0.1 N/20 mm (preferably, 0.0001 N/20 mm to 0.06 N/20 mm)

Although not illustrated, in the present embodiment, the separator 26 is arranged on the outermost surface of the wound electrode body 20a after the press forming, and the shape of the wound electrode body 20a is maintained by attaching a winding stopper tape to the end of the winding of such a separator 26. As the winding stopper tape, any conventionally known tape used for wound electrode bodies can be used without any particular restrictions. Although not illustrated, in the present embodiment, the end of the winding of the positive electrode 22 is arranged at the curved portion 20r of the electrode body 20a. In the above manner, the electrode bodies 20a, 20b, and 20c according to the present embodiment can be produced.

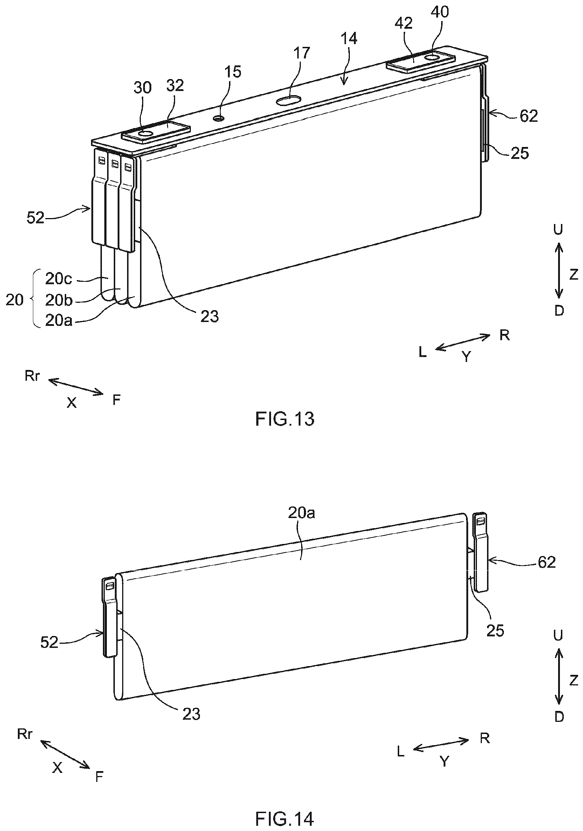

Next, an electrode body group 20 integrated with a sealing plate 14 is produced. Specifically, first, as illustrated in FIG. 13, three wound electrode bodies 20a, each being equipped with a positive-electrode second current collector 52 and a negative-electrode second current collector 62, are prepared, and they are arranged side by side in the short side direction X as the wound electrode bodies 20a, 20b, and 20c. At this time, all the wound electrode bodies 20a, 20b, and 20c may be arranged in parallel such that the positive-electrode second current collector 52 is arranged on one side in the long side direction Y (on the left side in FIG. 13), and the negative-electrode second current collector 62 is arranged on the other side in the long side direction Y (on the right side in FIG. 13).

Next, with the positive electrode tabs 22t curved as illustrated in FIG. 12, a positive-electrode first current collector 51 fixed to the sealing plate 14 is joined to each of the positive-electrode second current collectors 52 of the wound electrode bodies 20a, 20b, and 20c. With the negative electrode tabs 24t curved, a negative-electrode first current collector 61 fixed to the sealing plate 14 is joined to each of the negative-electrode second current collectors 62 of the wound electrode bodies 20a, 20b, and 20c. Examples of joining methods suitable for use include ultrasonic welding, resistance welding, laser welding, and the like. In particular, it is preferable to use welding through irradiation of high-energy rays such as laser. Such a welding process forms respective joint portions in a recess of the positive-electrode second current collector 52 and a recess of the negative-electrode second current collector 62.

Subsequently, a composite component produced in the way described above is housed in an internal space of an exterior body 12. Specifically, first, an electrode body holder 29 is prepared by folding an insulating resin sheet made of a resin material such as polyethylene (PE) into a pouch or box shape. Next, the electrode body group 20 is housed in the electrode body holder 29. The electrode body group 20 covered by the electrode body holder 29 is then inserted into the exterior body 12. When the weight of the electrode body group 20 is heavy, generally 1 kg or more, for example, 1.5 kg or more, or even 2 to 3 kg, it is desirable to arrange and insert the electrode body group 20 into the exterior body 12 such that a long sidewall 12b of the exterior body 12 intersects the direction of gravity (with the exterior body 12 oriented laterally).

Finally, the sealing plate 14 is joined to an edge of an opening 12h of the exterior body 12 to seal the opening 12h. The exterior body 12 and the sealing plate 14 are then joined together by welding. The welding joint between the exterior body 12 and the sealing plate 14 can be performed, for example, by laser welding or the like. Thereafter, the electrolyte solution is injected through a pouring hole 15, and the battery 100 is sealed by closing the pouring hole 15 with a sealing member 15a. In the way described above, the battery 100 can be manufactured.

### <Second Embodiment>

Subsequently, a method of manufacturing the battery according to a second embodiment will be described with reference to the flow chart of FIG. 1. First, the method of manufacturing the battery 100 according to the second embodiment is a method of manufacturing the battery 100 which includes the wound electrode bodies (here, wound electrode bodies 20a, 20b, and 20c) each having a flat shape, the wound electrode body including the first electrode (here, positive electrode 22) having a strip shape, the second electrode (here, negative electrode 24) having a strip shape, and separators 26 (here, first separator 26Si and second separator 26S₂), each having a strip shape, the first electrode and the second electrode being wound with the separators 26 interposed therebetween. As illustrated in FIG. 1, the method of manufacturing the battery 100 according to the second embodiment includes: the winding step (step S2) of winding the first electrode (here, positive electrode 22) and the second electrode (here, negative electrode 24) with the separator 26 interposed therebeween to produce the wound body 20A; and the pressing step (step S3) of pressing the wound body 20A to form the wound electrode bodies (here, wound electrode bodies 20a, 20b, and 20c), each having the flat shape, after the winding step. In the winding step, the separator 26 partially having the adhesive layer 6 on at least one surface thereof is used. The adhesive layer 6 includes the first adhesive region 6A and the second adhesive region 6B. The thickness T1 of the first adhesive region 6A is larger than the thickness T2 of the second adhesive region 6B. The first adhesive region 6A and the first electrode (here, positive electrode 22) adhere to each other. In the pressing step, the second adhesive region 6B and the first electrode (here, positive electrode 22) adhere to each other.

As described above, in the winding step, the first adhesive region 6A and the first electrode (here, positive electrode 22) adhere to each other (see FIG. 7), and in the pressing step, in addition to the first adhesive region 6A, the second adhesive region 6B and the first electrode (here, positive electrode 22) adhere to each other (see FIG. 8). In the winding step, the electrode and the separator 26 do not intentionally adhere to each other strongly, and in the pressing step, they can be brought into a state of firstly adhering to each other strongly. Therefore, in the pressing step, the positional relationship between the electrode and the separator 26 changes appropriately when this relationship changes. This can suitably suppress the occurrence of distortion, wrinkles, or the like in the separator 26. Since the separator 26 having the first adhesive region 6A and the electrode (here, positive electrode 22) adhere to each other in the winding step, the misalignment of winding of the wound body 20A can be suitably suppressed. That is, according to the method of manufacturing the battery 100 described above, the battery 100 having the wound electrode bodies 20a, 20b, and 20c can be obtained with high productivity.

With regard to the method of manufacturing the battery according to the second embodiment, various other matters including each step, the shape of the adhesive layer, the arrangement form, and the like can be understood by referring to the matters described in the chapter of the first embodiment.

### <Configuration of Battery>

Subsequently, an example of the battery obtained by the method of manufacturing the battery disclosed herein will be described.

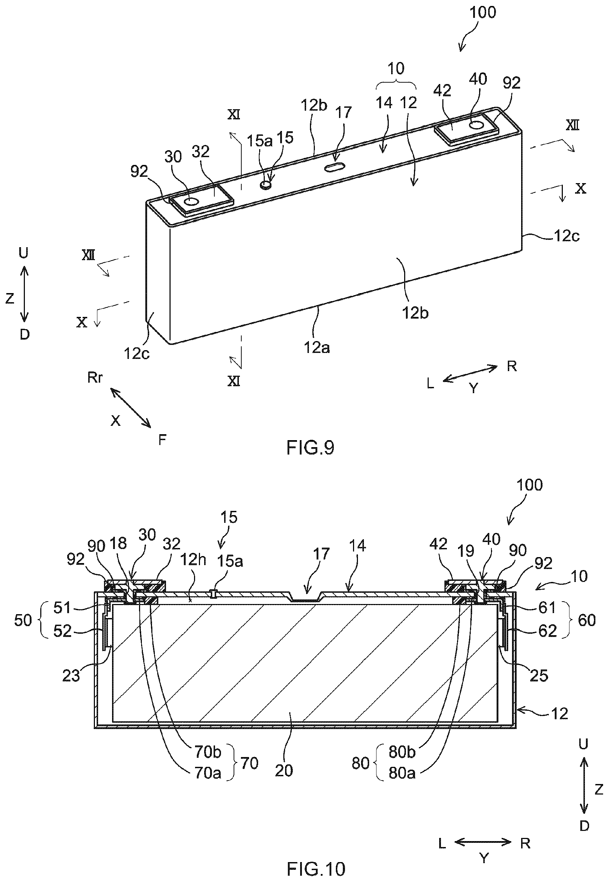

FIG. 9 is a perspective view of the battery 100. FIG. 10 is a schematic longitudinal-sectional view taken along the line X-X in FIG. 9. FIG. 11 is a schematic longitudinal-sectional view taken along the line XI-XI in FIG. 9. FIG. 12 is a schematic cross-sectional view along the line XII-XII in FIG. 9. In the following description, reference characters L, R, F, Rr, U, and D in the figures represent left, right, front, rear, top, and bottom, respectively, and reference characters X, Y, and Z in the figures represent the short side direction, the long side direction orthogonal to the short side direction, and the vertical direction of the battery 100, respectively. However, these characters are only directions for convenience of explanation and do not limit the installation configuration of the battery 100 in any way.

As illustrated in FIG. 10, the battery 100 includes a battery case (case) 10 and the electrode body group 20. In addition to the battery case 10 and the electrode body group 20, the battery 100 according to the present embodiment also includes a positive electrode terminal 30, a positive-electrode external conductive member 32, a negative electrode terminal 40, a negative-electrode external conductive member 42, an external insulating member 92, a positive electrode current collector 50, a negative electrode current collector 60, a positive-electrode internal insulating member 70, and a negative-electrode internal insulating member 80. Although not illustrated, the battery 100 according to the present embodiment further includes the electrolyte solution. The battery 100 here is a lithium-ion secondary battery.

The battery case 10 is a housing that houses the electrode body group 20. The battery case 10 here has a flat and bottomed cuboid-shaped (square) appearance. The material of the battery case 10 may be the same as that conventionally used, and is not particularly limited. The battery case 10 is preferably made of metal having a predetermined strength. Examples of the metal material constituting the battery case 10 include aluminum, aluminum alloy, iron, iron alloy, and the like.

The battery case 10 includes the exterior body 12, the sealing plate 14, and a gas discharge valve 17. The exterior body 12 is a flat rectangular container with the opening 12h on its one surface. Specifically, as illustrated in FIG. 9, the exterior body 12 has a bottom wall 12a having a substantially rectangular shape, a pair of second side walls 12c extending upward as denoted by U from the short side of the bottom wall 12a and opposed to each other, and a pair of first side walls 12b extending upward as denoted by U from a long side of the bottom wall 12a and opposed to each other. The area of the second side wall 12c is smaller than the area of the first side wall 12b. The opening 12h is formed on the top surface of the exterior body 12 surrounded by the pair of first side walls 12b and the pair of second side walls 12c. The sealing plate 14 is attached to the exterior body 12 so as to close the opening 12h of the exterior body 12. The sealing plate 14 is a plate having a substantially rectangular shape in plan view. The sealing plate 14 is opposed to the bottom wall 12a of the exterior body 12. The battery case 10 is formed by joining (e.g., welding) the sealing plate 14 to the periphery of the opening 12h of the exterior body 12. The joining of the sealing plate 14 can be performed by welding, such as laser welding, for example. Specifically, each of the pair of second side walls 12c is joined to the short side of the sealing plate 14, while each of the pair of first side walls 12b is joined to the long side of the sealing plate 14.

As illustrated in FIGS. 9 and 10, the gas discharge valve 17 is formed on the sealing plate 14. The gas discharge valve 17 is configured to open when the pressure inside the battery case 10 becomes a predetermined value or higher and to discharge gas in the battery case 10. The gas discharge valve 17 in the present embodiment is a recess having a substantially circular shape in plan view that is depressed from the outer surface of the sealing plate 14 toward the electrode body group 20 side. The bottom of such a gas discharge valve 17 has a thin portion that is thinner than the sealing plate 14. The thin portion of the gas discharge valve 17 ruptures when the pressure inside the case becomes the predetermined value or higher. This allows the gas inside the battery case 10 to be discharged to the outside, thereby reducing the elevated internal pressure inside the case.

In addition to the gas discharge valve 17, the sealing plate 14 is provided with the pouring hole 15 and two terminal insertion holes 18 and 19. The pouring hole 15 communicates with the internal space of the exterior body 12 and is an opening provided for pouring the electrolyte solution in the manufacturing process of the battery 100. The pouring hole 15 is sealed by the sealing member 15a. For example, a blind rivet is suitable as the sealing member 15a. This allows the sealing member 15a to be firmly fixed inside the battery case 10. The terminal insertion holes 18 and 19 are respectively formed at both ends of the sealing plate 14 in the long side direction Y, with one terminal insertion hole at each end. The terminal insertion holes 18 and 19 penetrate the sealing plate 14 in the vertical direction Z. As illustrated in FIG. 9, the positive electrode terminal 30 is inserted into the terminal insertion hole 18 on one side (left side) in the long side direction Y The negative electrode terminal 40 is inserted into the terminal insertion hole 19 on the other (right) side in the long side direction Y

FIG. 13 is a perspective view schematically illustrating the wound electrode body attached to the sealing plate 14. In the present embodiment, the wound electrode bodies 20a, 20b, and 20c (here, three wound electrode bodies) are housed inside the battery case 10. The number of wound electrode bodies housed inside one battery case 10 is not particularly limited and may be one, or two or more (plural). As illustrated in FIG. 10, the positive electrode current collector 50 is arranged on one side of each wound electrode body in the long side direction Y (left side in FIG. 10), and the negative electrode current collector 60 is arranged on the other side in the long side direction Y (right side in FIG. 10). The respective wound electrode bodies 20a, 20b, and 20c are connected in parallel. However, the wound electrode bodies 20a, 20b, and 20c may be connected in series. Each wound electrode body here is housed inside the exterior body 12 of the battery case 10 while being covered with the electrode body holder 29 made of a resin sheet (see FIG. 11).

FIG. 14 is a perspective view schematically illustrating the wound electrode body 20a. FIG. 15 is a schematic diagram illustrating a configuration of the wound electrode body 20a. Here, in FIG. 15, the illustration of the adhesive layer 6 formed on the surface of the separator 26 is omitted for ease of viewing. The wound electrode body 20a will be described in detail below as an example, but the same configuration can also be used in the wound electrode bodies 20b and 20c.

As illustrated in FIG. 15, the wound electrode body 20a includes the positive electrode 22, the negative electrode 24, and the separator 26. The wound electrode body 20a here is a wound electrode body in which the positive electrode 22 having a strip shape and the negative electrode 24 having a strip shape are stacked via two separators 26 having a strip shape and wound about a winding axis WL.

The wound electrode body 20a has a flat shape. The wound electrode body 20a is arranged inside the exterior body 12 in an orientation in which the winding axis WL is substantially parallel to the long side direction Y Specifically, as illustrated in FIG. 11, the wound electrode body 20a has a pair of curved portions (R portions) 20r facing the bottom wall 12a of the exterior body 12 and the sealing plate 14, and flat portions 20f connecting the pair of curved portions 20r and facing the second side walls 12c of the exterior body 12. The flat portion 20f extends along the second side wall 12c.

The positive electrode 22 has a positive electrode current collector 22c, and the positive-electrode active material layer 22a and a positive electrode protective layer 22p both of which are affixed onto at least one surface of the positive electrode current collector 22c, as illustrated in FIG. 15. However, the positive electrode protective layer 22p is not essential and can be omitted in other embodiments. The positive electrode current collector 22c is strip-shaped. The positive electrode current collector 22c is made of a conductive metal, such as aluminum, aluminum alloy, nickel, or stainless steel, for example. The positive electrode current collector 22c here is a metal foil, specifically an aluminum foil.

The positive electrode tabs 22t are provided at one end of the positive electrode current collector 22c in the long side direction Y (left end in FIG. 15). The positive electrode tabs 22t are provided at intervals (intermittently) along the longitudinal direction of the strip-shaped positive electrode 22. The positive electrode tabs 22t protrude outwardly from the separator 26 toward one side of the winding axis WL in the axial direction (left side in FIG. 15). The positive electrode tabs 22t may be provided on the other side of the winding axis WL in the axial direction (right side as illustrated in FIG. 15), or may be provided on each of both sides of the winding axis WL in the axial direction. The positive electrode tab 22t is a part of the positive electrode current collector 22c and is made of a metal foil (aluminum foil). However, the positive electrode tab 22t may be a separate member from the positive electrode current collector 22c. At least a part of the positive electrode tab 22t has an area where the positive-electrode active material layer 22a and the positive electrode protective layer 22p are not formed and the positive electrode current collector 22c is exposed.

As illustrated in FIG. 12, the positive electrode tabs 22t are stacked at one end of the winding axis WL in the axial direction (left end in FIG. 12) to constitute the positive electrode tab group 23. The respective positive electrode tabs 22t are bent such that their outer ends are aligned. This allows the battery 100 to be downsized by improving its accommodability in the battery case 10. As illustrated in FIG. 10, the positive electrode tab group 23 is electrically connected to the positive electrode terminal 30 via the positive electrode current collector 50. Specifically, the positive electrode tab group 23 and the positive-electrode second current collector 52 are connected together at a connection portion J (see FIG. 12). The positive-electrode second current collector 52 is electrically connected to the positive electrode terminal 30 via the positive-electrode first current collector 51. The size of each of the positive electrode tabs 22t (length along the long side direction Y and width orthogonal to the long side direction Y, see FIG. 15) can be adjusted as appropriate in consideration of the state of connection to the positive electrode current collector 50, for example, by its formed position or the like. Here, the respective sizes of the positive electrode tabs 22t are made different from each other so that their outer ends are aligned when curved.

As illustrated in FIG. 15, the positive-electrode active material layer 22a is provided in the strip shape along the longitudinal direction of the strip-shaped positive electrode current collector 22c. The positive-electrode active material layer 22a contains a positive electrode active material (e.g., a lithium transition metal composite oxide such as lithium nickel cobalt manganese composite oxide) that can reversibly absorb and release charge carriers. When the total solid content of the positive-electrode active material layer 22a is assumed to be 100% by mass, the positive electrode active material may generally account for 80% by mass or more, typically 90% by mass or more, for example, 95% by mass or more. The positive-electrode active material layer 22a may contain optional components other than the positive electrode active material, such as a conductive material, a binder, and various additive components, for example. As the conductive material, a carbon material such as acetylene black (AB), for example, can be used. As the binder, for example, polyvinylidene fluoride (PVdF) can be used.

The positive electrode protective layer 22p is provided in a boundary portion between the positive electrode current collector 22c and the positive-electrode active material layer 22a in the long side direction Y as illustrated in FIG. 15. The positive electrode protective layer 22p here is provided at one end of the positive electrode current collector 22c in the axial direction of the winding axis WL (left end in FIG. 15). However, the positive electrode protective layer 22p may be provided at both ends in the axial direction. The positive electrode protective layer 22p is provided in a strip shape along the positive-electrode active material layer 22a. The positive electrode protective layer 22p contains an inorganic filler (e.g., alumina). When the total solid content of the positive electrode protective layer 22p is assumed to be 100% by mass, the inorganic filler may generally account for 50% by mass or more, typically 70% by mass or more, for example, 80% by mass or more. The positive electrode protective layer 22p may contain optional components other than the inorganic filler, such as a conductive material, a binder, and various additive components, for example. The conductive material and binder may be the same as those exemplified to be able to be included in the positive-electrode active material layer 22a.

The negative electrode 24 has a negative electrode current collector 24c and the negative-electrode active material layer 24a affixed onto at least one surface of the negative electrode current collector 24c as illustrated in FIG. 15. The negative electrode current collector 24c is strip-shaped. The negative electrode current collector 24c is made of conductive metal, such as copper, copper alloy, nickel, or stainless steel, for example. The negative electrode current collector 24c here is a metal foil, specifically a copper foil.

The negative electrode tabs 24t are provided at one end of the negative electrode current collector 24c in the axial direction of the winding axis WL (right end in FIG. 15). The negative electrode tabs 24t are provided at intervals (intermittently) along the longitudinal direction of the strip-shaped negative electrode 24. Each of the negative electrode tabs 24t protrudes outwardly from the separator 26 toward one side of the negative electrode 24 in the axial direction (right side in FIG. 15). However, the negative electrode tab 24t may be provided at the other end of the negative electrode 24 in the axial direction (left end in FIG. 15) or may be provided at each of both ends of the negative electrode 24 in the axial direction. The negative electrode tab 24t is part of the negative electrode current collector 24c and is made of a metal foil (copper foil). However, the negative electrode tab 24t may be a separate member from the negative electrode current collector 24c. At least a part of the negative electrode tab 24t has an area where the negative-electrode active material layer 24a is not formed and the negative electrode current collector 24c is exposed.

As illustrated in FIG. 12, the negative electrode tabs 24t are stacked at one end of the negative electrode 24 in the axial direction (right end in FIG. 12) to constitute the negative electrode tab group 25. The negative electrode tab group 25 is preferably provided at a position symmetrical to the positive electrode tab group 23 in the axial direction. The respective negative electrode tabs 24t are bent such that their outer ends are aligned. This allows the battery 100 to be downsized by improving its accommodability in the battery case 10. As illustrated in FIG. 10, the negative electrode tab group 25 is electrically connected to the negative electrode terminal 40 via the negative electrode current collector 60. Specifically, the negative electrode tab group 25 and the negative-electrode second current collector 62 are connected together at the connection portion J (see FIG. 12). The negative-electrode second current collector 62 is electrically connected to the negative electrode terminal 40 via the negative-electrode first current collector 61. As in the positive electrode tabs 22t, the respective sizes of the negative electrode tabs 24t are here made different from each other so that their outer ends are aligned when curved.

As illustrated in FIG. 15, the negative-electrode active material layer 24a is provided in the strip shape along the longitudinal direction of the strip-shaped negative electrode current collector 24c. The negative-electrode active material layer 24a contains a negative electrode active material (e.g., carbon material such as graphite) that can reversibly absorb and release charge carriers. When the total solid content of the negative-electrode active material layer 24a is assumed to be 100% by mass, the negative electrode active material may generally account for 80% by mass or more, typically 90% by mass or more, for example, 95% by mass or more. The negative-electrode active material layer 24a may contain optional components other than the negative electrode active material, such as a binder, a dispersant, and various additive components, for example. As the binder, rubbers such as styrene-butadiene rubber (SBR), for example, may be used. As the dispersant, cellulose and its derivatives such as carboxymethyl cellulose (CMC), for example, may be used.

The separator 26 is a strip-shaped member as illustrated in FIGS. 15 and 3. The separator 26 is an insulating sheet that has fine through holes formed so as to allow the charge carriers to pass therethrough. The width of the separator 26 is larger than the width of the negative-electrode active material layer 24a. By interposing the separator 26 between the positive electrode 22 and the negative electrode 24, the contact between the positive electrode 22 and the negative electrode 24 is prevented, and charge carriers (e.g., lithium ions) can be moved between the positive electrode 22 and the negative electrode 24. Although not particularly limited, the thickness of the separator 26 (length in the stacking direction MD in FIG. 16; the same applies hereinafter) is preferably 3 µm or more, and more preferably 5 µm or more. The thickness of the separator 26 is preferably 25 µm or less, more preferably 18 µm or less, and even more preferably 14 µm or less.

Two separators 26 are used here in one wound electrode body 20a. The two separators 26, i.e., a first separator and a second separator, are preferably included in one wound electrode body 20a as in the present embodiment. The two separators 26 have the same configuration here, but may have different configurations. In other embodiments, the separator may be a single sheet, and for example, a strip-shaped separator may be folded in a zigzag manner when a laminated electrode body is produced as an electrode body.

Here, FIG. 16 is an enlarged diagram schematically illustrating interfaces between the positive electrode 22 and the separator 26 and between the negative electrode 24 and the separator 26 according to the present embodiment. As illustrated in FIG. 16, the separator 26 according to the present embodiment has a base material layer 27 and the heat resistance layer 28 (HRL) provided on one surface of the base material layer 27. The adhesive layer 6 is present on the surface of the heat resistance layer 28.

As the base material layer 27, a microporous membrane used for battery separators known in the prior art can be used without any particular restrictions. The base material layer 27 is preferably a porous sheet-shaped member. The base material layer 27 may have a single-layer structure or a structure of two or more layers, for example, a structure of three layers. The base material layer 27 is preferably made of polyolefin resin. The entire base material layer 27 is more preferably made of polyolefin resin. The base material layer 27 is, for example, a microporous membrane made of polyolefin, preferably a microporous membrane made of polyethylene. This sufficiently ensures the flexibility of the separator 26 and can facilitate the production (winding and press forming) of the wound electrode body 20a. As the polyolefin resin, polyethylene (PE), polypropylene (PP), or a mixture thereof is preferable, and PE is even more preferable.

Although not particularly limited, the thickness of the base material layer 27 (length in the stacking direction MD; the same applies hereinafter) is preferably 3 µm or more, and more preferably 5 µm or more. The thickness of the base material layer 27 is preferably 25 µm or less, more preferably 18 µm or less, and even more preferably 14 µm or less. The air permeability of the base material layer 27 is preferably 30 sec/100cc to 500 sec/100cc, more preferably 30 sec/100cc to 300 sec/100cc, and even more preferably 50 sec/100cc to 200 sec/100cc.

The heat resistance layer 28 is provided on top of the base material layer 27. The heat resistance layer 28 is preferably formed on top of the base material layer 27. The heat resistance layer 28 may be provided directly on the surface of the base material layer 27 or may be provided over the base material layer 27 via another layer. The heat resistance layer 28 is preferably formed on one or both surfaces of the base material layer 27. However, the heat resistance layer 28 is not essential and may be omitted in other embodiments. The heat resistance layer 28 here is provided on the entire surface of the base material layer 27 facing the positive electrode 22. This can more reliably suppress the thermal contraction of the separator 26 and contribute to improving the safety of the battery 100. The basis weight of the heat resistance layer 28 here is uniform in the longitudinal direction LD of the separator 26 and the winding axis direction WD. Although not particularly limited, the thickness of the heat resistance layer 28 (length in the stacking direction MD; the same applied hereinafter) is preferably 0.3 µm or more, more preferably 0.5 µm or more, and even more preferably 1 µm or more. The thickness of the heat resistance layer 28 is preferably 6 µm or less, and more preferably 4 µm or less. The heat resistance layer 28 preferably contains an inorganic filler and a heat-resistant layer binder.

As the inorganic filler, those conventionally known and used for this type of application can be used without any particular restrictions. The inorganic filler preferably contains insulating ceramic particles. Of them, when taking into consideration heat resistance, availability, and the like, inorganic oxides such as alumina, zirconia, silica, and titania, metal hydroxides such as aluminum hydroxide, and clay minerals such as boehmite are preferable, and alumina and boehmite are more preferable. In particular, a compound containing aluminum is preferable from the viewpoint of suppressing the thermal contraction of the separator 26. The proportion of the inorganic filler in the total mass of the heat resistance layer 28 is preferably 85% by mass or more, more preferably 90% by mass or more, and even more preferably 95% by mass or more.

As the heat-resistant layer binder, those conventionally known and used for this type of application can be used without any particular restrictions. Specific examples thereof include acrylic resins, fluorine resins (e.g., PVdF), epoxy resins, urethane resins, ethylene vinyl acetate resin, and the like. Of them, acrylic resins are preferable.

The adhesive layer 6 is here provided on the surface facing the positive electrode 22 and in contact with the positive electrode 22. The adhesive layer 6 is preferably formed on at least a surface of the separator 26 on the positive electrode 22 side as illustrated in FIG. 16. The adhesive layer 6 is here provided over the heat resistance layer 28. The adhesive layer 6 is preferably formed over the heat resistance layer 28. The adhesive layer 6 may be provided directly on the surface of the heat resistance layer 28 or may be provided over the heat resistance layer 28 via another layer. The adhesive layer 6 may be provided directly on the surface of the base material layer 27 or may be provided over the base material layer 27 via a layer other than the heat resistance layer 28. The adhesive layer 6 can be a layer that has a relatively higher compatibility with the electrolyte solution than, for example, the heat resistance layer 28, and which absorbs the electrolyte solution to swell. Although not particularly limited, the thickness of the adhesive layer 6 in the wound electrode body 20a (i.e., the length in the stacking direction MD in FIG. 16, corresponding to T in FIG. 16, which can also be referred to as the thickness of the adhesive layer 6 after the pressing step) is preferably 0.1 µm or more, more preferably 0.2 µm or more, and even more preferably 0.5 µm or more. The thickness of the adhesive layer 6 is preferably 10 µm or less, more preferably 5 µm or less, and even more preferably 3 µm or less. That is, the thickness of the adhesive layer 6 in the wound electrode body 20a is preferably in the range of, for example, 0.1 µm to 10 µm. By setting the thickness within such a range, the adhesiveness of the adhesive layer 6, the uniformity of the charge-discharge reaction in the battery 100, the suppression of Li deposition, and the like can be suitably achieved.

The diameter of the adhesive layer 6 in the wound electrode body 20a (corresponding to D in FIG. 16, which can also be referred to as the diameter of the adhesive layer 6 after the pressing step) is, for example, 10 µm or more, preferably 50 µm or more, more preferably 75 µm or more, and even more preferably 100 µm or more. The thickness of the adhesive layer 6 is, for example, 600 µm or less, preferably 500 µm or less, more preferably 300 µm or less, and even more preferably 200 µm or less. That is, the thickness of the adhesive layer 6 in the wound electrode body 20a is preferably in the range of, for example, 50 µm to 500 µm. By setting the thickness within such a range, the adhesiveness of the adhesive layer 6, the uniformity of the charge-discharge reaction in the battery 100, the suppression of Li deposition, and the like can be suitably achieved.

As for the resin constituting the adhesive layer 6, it is recommended to refer to the corresponding sections in <Method of Manufacturing Battery>.

The electrolyte solution may be the same as that used in the prior art without any particular restrictions. The electrolyte solution is, for example, a non-aqueous electrolyte solution containing a non-aqueous solvent and a supporting salt. The non-aqueous solvent contains carbonates, such as ethylene carbonate, dimethyl carbonate, and ethyl methyl carbonate, for example. The supporting salt is a fluorine-containing lithium salt, such as LiPF₆. However, the electrolyte solution may be in solid form (solid electrolyte) and integrated with the electrode body group 20.

As illustrated in FIG. 10, the positive electrode terminal 30 is inserted in the terminal insertion hole 18 formed at one end of the sealing plate 14 (left end in FIG. 10) in the long side direction Y The positive electrode terminal 30 is preferably made of metal, and more preferably aluminum or aluminum alloy, for example. Meanwhile, the negative electrode terminal 40 is inserted in the terminal insertion hole 19 formed at the other end of the sealing plate 14 (right end in FIG. 10) in the longitudinal direction Y The negative electrode terminal 40 is preferably made of metal, and more preferably copper or copper alloy, for example. These electrode terminals (positive electrode terminal 30 and negative electrode terminal 40) here protrude from the same surface of the battery case 10 (specifically, the sealing plate 14). However, the positive and negative electrode terminals 30 and 40 may protrude from different surfaces of the battery case 10. The electrode terminals (positive electrode terminal 30 and negative electrode terminal 40) inserted in the terminal insertion holes 18 and 19, respectively, are preferably fixed to the sealing plate 14 by caulking or the like.

As described above, the positive electrode terminal 30 is electrically connected to the positive electrode 22 of each of the wound electrode bodies 20a, 20b, and 20c (see FIG. 13) via the positive electrode current collector 50 (positive-electrode first current collector 51, and positive-electrode second current collector 52) inside the exterior body 12 as illustrated in FIG. 10. The positive electrode terminal 30 is insulated from the sealing plate 14 by the positive-electrode internal insulating member 70 and a gasket 90. The positive-electrode internal insulating member 70 has a base portion 70a interposed between the positive-electrode first current collector 51 and the sealing plate 14, and a protruding portion 70b protruding from the base portion 70a toward the wound electrode body 20a. The positive electrode terminal 30 exposed to the outside of the battery case 10 through the terminal insertion hole 18 is connected to the positive-electrode external conductive member 32 outside the sealing plate 14. Meanwhile, the negative electrode terminal 40 is electrically connected to the negative electrode 24 of each of the wound electrode bodies 20a (see FIG. 13) via the negative electrode current collector 60 (negative-electrode first current collector 61, and negative-electrode second current collector 62) inside the exterior body 12 as illustrated in FIG. 10. The negative electrode terminal 40 is insulated from the sealing plate 14 by the negative-electrode internal insulating member 80 and the gasket 90. As in the positive-electrode internal insulating member 70, the negative-electrode internal insulating member 80 has a base portion 80a interposed between the negative-electrode first current collector 61 and the sealing plate 14, and a protruding portion 80b protruding from the base portion 80a toward the wound electrode body 20a. The negative electrode terminal 40 exposed to the outside of the battery case 10 through the terminal insertion hole 19 is connected to the negative-electrode external conductive member 42 outside the sealing plate 14. The external insulating member 92 is interposed between an outer surface 14d of the sealing plate 14 and each of the external conductive members (positive-electrode external conductive member 32 and negative-electrode external conductive member 42) described above. The external insulating member 92 can insulate the external conductive members 32 and 42 from the sealing plate 14.

The protruding portions 70b and 80b of the internal insulating members (positive-electrode internal insulating member 70 and negative-electrode internal insulating member 80) described above are arranged between the sealing plate 14 and the wound electrode body 20a. The protruding portions 70b and 80b of the internal insulating members restrict the upward movement of the wound electrode body 20a and thus can prevent contact between the sealing plate 14 and the wound electrode body 20a.

### <Applications of Battery>

The battery 100 is usable for various applications. For example, it can be suitably used as a power source (drive power source) for motors installed in vehicles such as passenger cars and trucks. The type of vehicles is not particularly limited, but examples thereof include plug-in hybrid electric vehicles (PHEV), hybrid electric vehicles (HEV), and electric vehicles (BEV). The battery 100 can be suitably used to construct a battery pack because variations in the battery reaction are reduced.

Although one embodiment of the present disclosure has been described above, the above embodiment is illustrative only. The present disclosure can be implemented in various other embodiments. The present disclosure can be implemented based on the contents disclosed herein and the technical common sense in the field. The technology described in the claims includes various variations and modifications of the embodiments exemplified above. For example, a part of the embodiment can be replaced with other variants, or other variants can be added to the above embodiment. In addition, a technical feature can be deleted as appropriate if that feature is not described as essential.

For example, in the above embodiment, the adhesive layer 6 is formed on the surface of the separator 26 facing the positive electrode 22, but is not limited thereto. In other embodiments, the adhesive layer 6 may be formed on the surface of the separator 26 facing the negative electrode 24. Alternatively, the adhesive layer 6 may be formed on the surface of the separator 26 facing the positive electrode 22 and on the surface of the separator 26 facing the negative electrode 24. When the electrode body has two separators, an adhesive layer may be disposed only on one of the surfaces of the separator.

For example, in the above embodiment, the adhesive layer 6 has the first adhesive region 6A and the second adhesive region 6B, but is not limited thereto. In other embodiments:, the adhesive layer 6 may further have another adhesive region in addition to these regions.

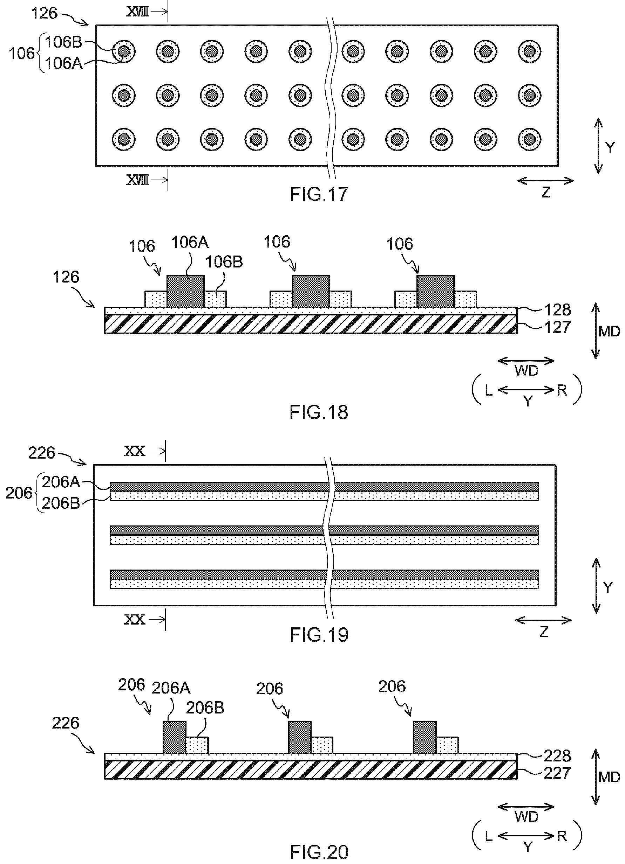

For example, FIG. 17 is a diagram corresponding to FIG. 3, according to a third embodiment. FIG. 18 is a schematic longitudinal-sectional view taken along the line XVIII-XVIII in FIG. 17. As illustrated in FIGS. 17 and 18, in the third embodiment, a separator 126 has a plurality of adhesive layers 106 arranged in circular dots in the plan view. Each adhesive layer 106 includes a first adhesive region 106A (center region) and a second adhesive region 106B (outer peripheral region). The thickness of the first adhesive region 106A (length in the MD direction in FIG. 18) is larger than the thickness of the second adhesive region 106B (length in the MD direction in FIG. 18). With such an arrangement, in the winding step, the separator 126 and the electrode adhere to each other weakly, but in the pressing step, the separator 126 and the electrode first adhere to each other strongly. The third embodiment may be the same as the first embodiment except that the shape of the adhesive layer is changed. The ratio of the thickness of the first adhesive region 106A to the thickness of the second adhesive region 106B can be understood by referring to the ratio of T1 to T2 described above.

For example, FIG. 19 is a diagram corresponding to FIG. 3, according to a fourth embodiment. FIG. 20 is a schematic longitudinal-sectional view taken along the line XX-XX in FIG. 19. As illustrated in FIGS. 19 and 20, in the fourth embodiment, a separator 226 has a plurality of adhesive layers 206 arranged linearly in the plan view. Each adhesive layer 206 includes a first adhesive region 206A and a second adhesive region 206B. The thickness of the first adhesive region 206A (length in the MD direction in FIG. 20) is larger than the thickness of the second adhesive region 206B (length in the MD direction in FIG. 20). With such an arrangement, in the winding step, the separator 226 and the electrode adhere to each other weakly, but in the pressing step, the separator 226 and the electrode adhere to each other strongly. The fourth embodiment may be the same as the first embodiment except that the shape of the adhesive layer is changed. The ratio of the thickness of the first adhesive region 206A to the thickness of the second adhesive region 206B can be understood by referring to the ratio of T1 to T2 described above.

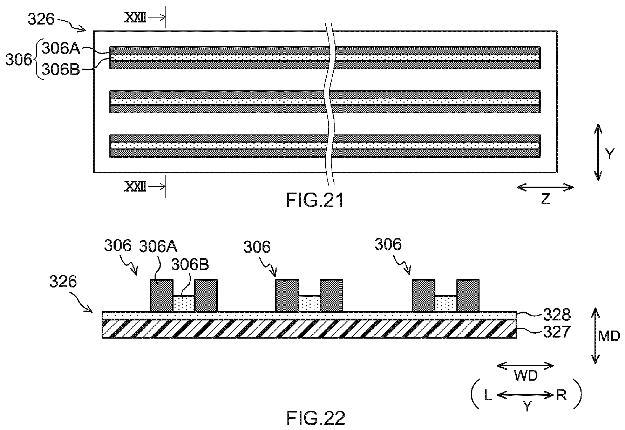

For example, FIG. 21 is a diagram corresponding to FIG. 3, according to a fifth embodiment. FIG. 22 is a schematic longitudinal-sectional view taken along the line XXII-XXII in FIG. 21. As illustrated in FIGS. 21 and 22, in the fifth embodiment, a separator 326 has a plurality of adhesive layers 306 arranged linearly in the plan view. Each adhesive layer 306 includes a second adhesive region 306B and first adhesive regions 306A present on both sides of the second adhesive region 306B, with one first adhesive region on each side. With such an arrangement, in the winding step, the separator 326 and the electrode adhere to each other weakly, but in the pressing step, the separator 326 and the electrode first adhere to each other strongly. The fifth embodiment may be the same as the first embodiment except that the shape of the adhesive layer is changed. The ratio of the thickness of the first adhesive region 306A to the thickness of the second adhesive region 306B can be understood by referring to the ratio of T1 to T2 described above.

As described above, one aspect of the technology disclosed herein is one described in the following paragraph (item).

### Item 1.

A method of manufacturing an electricity storage device including a wound electrode body having a flat shape, the wound electrode body including a first electrode having a strip shape, a second electrode having a strip shape, and a separator having a strip shape, the first electrode and the second electrode being wound with the separator interposed therebetween, the method comprising the steps of
winding the first electrode and the second electrode with the separator interposed therebetween to produce a wound body; and
after the winding step, pressing the wound body to form a wound electrode body having a flat shape, wherein
the separator partially having an adhesive layer on at least one surface thereof is used in the winding step,
the adhesive layer includes a first adhesive region and a second adhesive region, and
a thickness of the first adhesive region is larger than a thickness of the second adhesive region.

In addition, specific aspects of the technology disclosed herein are described in the following respective paragraphs (items).

### Item 2.

The method of manufacturing an electricity storage device according to item 1, wherein a thickness T1 of the first adhesive region is 1.5 times or more a thickness T2 of the second adhesive region.

### Item 3.

The method of manufacturing an electricity storage device according to item 1, wherein in the winding step, the first adhesive region and the first electrode adhere to each other, and in the pressing step, the second adhesive region and the first electrode adhere to each other.

### Item 4.

The method of manufacturing an electricity storage device according to any one of items 1 to 3, wherein the adhesive layer is arranged in dots in plan view.

### Item 5.

The method of manufacturing an electricity storage device according to any one of items 1 to 3, wherein the adhesive layer is arranged linearly in plan view.

### Item 6.

The method of manufacturing an electricity storage device according to any one of items 1 to 5, wherein a ratio of a formed area of the adhesive layer on one surface of the separator to an area of the one surface of the separator in plan view is 0.005 to 0.5.

### Item 7.

The method of manufacturing an electricity storage device according to any one of items 1 to 6, wherein a ratio of a formed area of the first adhesive region to an area of the adhesive layer in plan view is 0.2 to 0.8.

### Item 8.

The method of manufacturing an electricity storage device according to any one of items 1 to 7, wherein a main component of a resin constituting the first adhesive region is the same as a main component of a resin constituting the second adhesive region.

### Item 9.

The method of manufacturing an electricity storage device according to any one of items 1 to 8, further comprising the step of: before the winding step, forming the adhesive layer on at least one surface of the separator.

### Item 10.

A separator for an electricity storage device, partially having an adhesive layer on at least one surface thereof, wherein the adhesive layer includes a first adhesive region and a second adhesive region, and a thickness T1 of the first adhesive region is 1.5 times or more a thickness T2 of the second adhesive region.

### Item 11.

The separator for an electricity storage device according to item 10, wherein the adhesive layer is arranged in dots in plan view.

### Item 12.

The separator for an electricity storage device according to item 10, wherein the adhesive layer is arranged linearly in plan view.

### Item 13.

The separator for an electricity storage device according to any one of items 10 to 12, wherein a ratio of a formed area of the adhesive layer on one surface of the separator to an area of the one surface of the separator in plan view is 0.005 to 0.5.

### Item 14.

The separator for an electricity storage device according to any one of items 10 to 13, wherein a ratio of a formed area of the first adhesive region to an area of the adhesive layer in plan view is 0.2 to 0.8.

### Item 15.

The separator for an electricity storage device according to any one of items 10 to 14, wherein a main component of a resin constituting the first adhesive region is the same as a main component of a resin constituting the second adhesive region.

## Claims

1. A method of manufacturing an electricity storage device (100) including a wound electrode body (20) having a flat shape, the wound electrode body (20) including a first electrode (22) having a strip shape, a second electrode (24) having a strip shape, and a separator (26, 126, 226, 326) having a strip shape, the first electrode (22) and the second electrode (24) being wound with the separator (26, 126, 226, 326) interposed therebetween,
the method comprising the steps of
winding (S2) the first electrode (22) and the second electrode (24) with the separator (26, 126, 226, 326) interposed therebetween to produce a wound body (20A); and
after the winding step (S2), pressing (S3) the wound body (20A) to form a wound electrode body (20) having a flat shape,
wherein
the separator (26, 126, 226, 326) partially having an adhesive layer (6, 106, 206, 306) on at least one surface thereof is used in the winding step (S2),
the adhesive layer (6, 106, 206, 306) includes a first adhesive region (6A, 106A, 206A, 306A) and a second adhesive region (6B, 106B, 206B, 306B), and
a thickness T1 of the first adhesive region (6A, 106A, 206A, 306A) is 1.5 times or more a thickness T2 of the second adhesive region (6B, 106B, 206B, 306B).

2. A method of manufacturing an electricity storage device (100) including a wound electrode body (20) having a flat shape, the wound electrode body (20) including a first electrode (22) having a strip shape, a second electrode (24) having a strip shape, and a separator (26, 126, 226, 326) having a strip shape, the first electrode (22) and the second electrode (24) being wound with the separator (26, 126, 226, 326) interposed therebetween, the method comprising the steps of
winding (S2) the first electrode (22) and the second electrode (24) with the separator (26, 126, 226, 326) interposed therebetween to produce a wound body (20A); and
after the winding step (S2), pressing (S3) the wound body (20A) to form a wound electrode body (20) having a flat shape,
wherein
the separator (26, 126, 226, 326) partially having an adhesive layer (6, 106, 206, 306) on at least one surface thereof is used in the winding step (S2),
the adhesive layer (6, 106, 206, 306) includes a first adhesive region (6A, 106A, 206A, 306A) and a second adhesive region (6B, 106B, 206B, 306B),
a thickness of the first adhesive region (6A, 106A, 206A, 306A) is larger than a thickness of the second adhesive region (6B, 106B, 206B, 306B),
in the winding step (S2), the first adhesive region (6A, 106A, 206A, 306A) and the first electrode (22) adhere to each other, and
in the pressing step (S3), the second adhesive region (6B, 106B, 206B, 306B) and the first electrode (22) adhere to each other.

3. The method of manufacturing an electricity storage device (100) according to claim 1 or 2, wherein the adhesive layer (6, 106) is arranged in dots in plan view.

4. The method of manufacturing an electricity storage device (100) according to claim 1 or 2, wherein the adhesive layer (206, 306) is arranged linearly in plan view.

5. The method of manufacturing an electricity storage device (100) according to claim 1 or 2, wherein a ratio of a formed area of the adhesive layer (6, 106, 206, 306) on one surface of the separator (26, 126, 226, 326) to an area of the one surface of the separator (26, 126, 226, 326) in plan view is 0.005 to 0.5.

6. The method of manufacturing an electricity storage device (100) according to claim 1 or 2, wherein a ratio of a formed area of the first adhesive region (6A, 106A, 206A, 306A) to an area of the adhesive layer (6, 106, 206, 306) in plan view is 0.2 to 0.8.

7. The method of manufacturing an electricity storage device (100) according to claim 1 or 2, wherein a main component of a resin constituting the first adhesive region (6A, 106A, 206A, 306A) is the same as a main component of a resin constituting the second adhesive region (6B, 106B, 206B, 306B).

8. The method of manufacturing an electricity storage device (100) according to claim 1 or 2, further comprising the step of: before the winding step (S2), forming (S 1) the adhesive layer (6, 106, 206, 306) on at least one surface of the separator (26, 126, 226, 326).

9. A separator (26, 126, 226, 326) for an electricity storage device (100), partially having an adhesive layer (6, 106, 206, 306) on at least one surface thereof,
wherein
the adhesive layer (6, 106, 206, 306) includes a first adhesive region (6A, 106A, 206A, 306A) and a second adhesive region (6B, 106B, 206B, 306B), and
a thickness T1 of the first adhesive region (6A, 106A, 206A, 306A) is 1.5 times or more a thickness T2 of the second adhesive region (6B, 106B, 206B, 306B).

10. The separator (26, 126, 226, 326) for an electricity storage device (100) according to claim 9, wherein the adhesive layer (6A, 106A) is arranged in dots in plan view.

11. The separator (26, 126, 226, 326) for an electricity storage device (100) according to claim 9, wherein the adhesive layer (206A, 306A) is arranged linearly in plan view.

12. The separator (26, 126, 226, 326) for an electricity storage device (100) according to claim 9 or 10, wherein a ratio of a formed area of the adhesive layer (6, 106, 206, 306) on one surface of the separator (26, 126, 226, 326) to an area of the one surface of the separator (26, 126, 226, 326) in plan view is 0.005 to 0.5.

13. The separator (26, 126, 226, 326) for an electricity storage device (100) according to claim 9 or 10, wherein a ratio of a formed area of the first adhesive region (6A, 106A, 206A, 306A) to an area of the adhesive layer (6, 106, 206, 306) in plan view is 0.2 to 0.8.

14. The separator (26, 126, 226, 326) for an electricity storage device (100) according to claim 9 or 10, wherein a main component of a resin constituting the first adhesive region (6A, 106A, 206A, 306A) is the same as a main component of a resin constituting the second adhesive region (6B, 106B, 206B, 306B).
